# FASCICULE DE BREVET EUROPEEN

(11) **EP 1 833 708 B1**
(45) Date de publication et mention de la délivrance du brevet: **05.10.2011**
(21) Numéro de dépôt: 05822343.9
(22) Date de dépôt: 16.12.2005
(51) Int. Cl.: B60S 1/40

(54) **BALAI D'ESSUIE-GLACE UNIVERSEL ET CONNECTEUR AMOVIBLE ASSOCIE**
ANPASSBARER WINDSCHUTZSCHEIBEN-FLACHWISCHER UND ZUGEHÖRIGES LÖSBARES VERBINDUNGSTEIL
ADAPTABLE WINDSCREEN FLAT WIPER AND ASSOCIATED DETACHABLE JOINING PIECE

(30) Priorité: 23.12.2004 FR 0413794
(43) Date de publication de la demande: 19.09.2007
(73) Titulaire: VALEO SYSTEMES D'ESSUYAGE, 78321 La Verrière (FR)
(72) Inventeur: THIENARD, Jean-Claude, F-27140 Gisors (FR)
(74) Mandataire: Rosolen-Delarue, Katell
(86) Numéro de dépôt international: PCT/EP2005/013592
(87) Numéro de publication internationale: WO 2006/069648

(56) Documents cités:
- WO-A-02/053421
- WO-A-03/084790
- DE-A1- 10 320 930
- DE-A1- 10 326 266

## Description

La présente invention concerne un balai d'essuie-glace plat qui est en mesure d'être monté sur tout type de bras d'actionnement.

L'invention est également relative à un connecteur amovible qui est à même de coupler un tel balai d'essuie-glace plat avec au moins un type donné de bras d'actionnement.

Le document WO 03/084790 décrit le préambule de la revendication 1. L'invention trouve une application particulièrement avantageuse, mais non exclusive, dans le domaine des systèmes d'essuie-glace de véhicules automobiles.

Par rapport aux balais droits majoritairement employés à l'heure actuelle, un balai d'essuie-glace plat présente la particularité d'être dépourvu de structure à palonniers. Cette nouvelle génération de balai d'essuie-glace dispose toujours d'une lame racleuse souple, mais l'armature externe chargée de la supporter est ici remplacée par une structure flexible qui est directement intégrée à la lame.

Par ailleurs, tout comme son homologue droit de l'état de la technique, un balai d'essuie-glace plat comporte des moyens de connexion afin de pouvoir être couplé à tout bras d'actionnement de forme appropriée. On rappellera à cet égard qu'il existe différentes sortes de bras balais, comme par exemple les bras crochets, les bras à axe de pivotement latéral, les bras à clipsage longitudinal, etc.

Quoi qu'il en soit, les balais d'essuie-glace plats présentent aujourd'hui l'inconvénient de ne pas être standardisés, notamment au niveau des moyens de connexion chargés d'assurer leur raccordement. Dans la pratique, il existe ainsi autant de sortes de balais d'essuie-glace plats, qu'il y a de bras-balais différents. De plus, pour une catégorie de balais d'essuie-glace plats donnée, on trouve une pluralité de modes de réalisation différents du fait de la multitude de fabricants présents sur ce marché. Cela explique pourquoi au final, il existe un si grand nombre de balais d'essuie-glace plats intégrant des moyens de connexions spécifiques à un type donné de bras d'actionnement.

Cette offre pléthorique est certes stimulante en terme d'innovations pour les fabricants désireux de se démarquer de leurs concurrents. Mais en contrepartie, la multiplication des références au stade de la production et/ou de la distribution représente un coût significatif. Faute de standardisation, le prix des balais d'essuie-glace plats reste par conséquent beaucoup trop élevé.

Aussi le problème technique à résoudre, par l'objet de la présente invention, est de proposer un balai d'essuie-glace plat notamment pour un système d'essuie-glace de véhicule automobile, comportant une lame d'essuyage sur laquelle est monté un support de liaison destiné à son raccordement, balai d'essuie-glace plat qui permettrait d'éviter les problèmes de l'état de la technique en étant sensiblement moins onéreux que ses homologues de l'état de la technique, tout en étant potentiellement adaptable à tout type de bras d'actionnement.

La solution au problème technique posé consiste, selon la présente invention, en ce que le support de liaison est apte à être solidarisé rigidement et de manière amovible à un connecteur qui est lui-même en mesure d'être couplé de manière amovible à un bras d'actionnement.

Il est entendu que toute technique de solidarisation connue, permettant de réaliser une liaison rigide mais réversible, peut être avantageusement utilisée pour réaliser l'assemblage entre le support de liaison et le connecteur.

L'invention concerne également tout connecteur amovible associé, c'est-à-dire tout connecteur à même de coupler un tel balai d'essuie-glace plat avec un bras d'actionnement notamment d'un système d'essuie-glace de véhicule automobile. Un tel connecteur est remarquable en ce qu'il est apte, d'une part, à être solidarisé rigidement et de manière amovible au support de liaison du balai d'essuie-glace plat, et d'autre part, à être couplé de manière amovible au bras d'actionnement.

De manière parfaitement symétrique à ce qui a été dit juste précédemment, il est là aussi entendu que toute technique de solidarisation connue, permettant de réaliser une liaison rigide mais réversible, peut être avantageusement utilisée pour réaliser l'assemblage entre le connecteur et le support de liaison du balai d'essuie-glace plat.

L'invention telle qu'ainsi définie présente l'avantage de pouvoir concevoir un balai d'essuie-glace plat complètement standard, donc offrant un prix de revient intrinsèquement bas, tout en disposant d'une parfaite adaptabilité aux différents types de bras d'actionnement existants. Cette dernière caractéristique est avantageusement obtenue grâce au fait qu'un balai d'essuie-glace plat conforme à l'invention offre la capacité d'être couplé réversiblement et alternativement à différents connecteurs amovibles qui sont respectivement compatibles à au moins un type donné de bras d'actionnement.

La partie connecteur du balai d'essuie-glace étant amovible, elle peut être changée très facilement en fonction de la nature du bras d'actionnement sur lequel ledit balai doit être monté. La partie essuyage du balai d'essuie-glace plat peut quant à elle rester toujours la même, ce qui lui confère un caractère universel qui s'avère au final particulièrement avantageux en terme de coût.

Le fait de dissocier la partie essuyage, de la partie connecteur du balai d'essuie-glace plat, est pertinente également en raison du fait que ces deux éléments disposent de durées de vie tout à fait différentes. La lame d'essuyage ayant objectivement une durabilité environ trois fois inférieure à celle du connecteur, il apparaît en effet économiquement avantageux pour un consommateur de pouvoir changer ces éléments en fonction de leurs cycles d'usure propres.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est une vue d'ensemble qui illustre les combinaisons d'assemblage possibles entre un balai d'essuie-glace plat conforme à un premier mode de réalisation de l'invention, et trois connecteurs amovibles respectivement compatibles avec trois types différents de bras d'actionnement.
La figure 2 est un éclaté montrant, avant leur couplage, un premier connecteur de la figure 1 et son bras d'actionnement associé ; cette première variante de connecteur étant de type rotatif, le bras associé étant un bras à axe de pivotement latéral.
La figure 3 représente, en début de phase d'assemblage, le balai d'essuie-glace plat de la figure 1 et le connecteur rotatif couplé à son bras d'actionnement de la figure 2.
La figure 4 constitue une vue similaire à la figure 3, mais avec le balai d'essuie-glace plat et le connecteur rotatif en fin de phase d'assemblage.
La figure 5 est une coupe partielle montant la partie avant de l'assemblage représenté à la figure 4.
La figure 6 fait apparaître en détail la partie arrière de l'assemblage représenté à la figure 4.
La figure 7 est un éclaté illustrant, avant leur couplage, un second connecteur de la figure 1 et son bras d'actionnement associé ; cette seconde variante de connecteur étant un connecteur à crochet, le bras associé étant un bras crochet.
La figure 8 est une vue en perspective faisant apparaître le couplage entre le connecteur à crochet d'une part, et un adaptateur couplé au bras crochet d'autre part.
La figure 9 représente, en début de phase d'assemblage, le balai d'essuie-glace plat de la figure 1 et l'ensemble préassemblé de la figure 8.
La figure 10 constitue une vue similaire à la figure 9, mais avec le balai d'essuie-glace plat et le connecteur à crochet en fin de phase d'assemblage.
La figure 11 est une coupe partielle montrant la mobilité relative entre l'adaptateur et le connecteur à crochet des figures 7 à 10.
La figure 12 est un éclaté illustrant, avant leur couplage, un troisième connecteur de la figure 1 et son bras d'actionnement associé ; cette troisième variante de connecteur étant un connecteur clipsable, le bras associé étant un bras à clipsage longitudinal.
La figure 13 représente, en début de phase d'assemblage, le balai d'essuie-glace plat de la figure 1, ainsi que le connecteur clipsable et le bras d'actionnement associé de la figure 12.
La figure 14 est une vue similaire à la figure 13, dans laquelle le connecteur clipsable est simplement couplé à son bras d'actionnement.
La figure 15 constitue une vue similaire aux figures 13 et 14, mais avec le balai d'essuie-glace plat et le connecteur clipsable en fin de phase d'assemblage.
La figure 16 illustre les combinaisons d'assemblage possibles entre un balai d'essuie-glace plat conforme à un second mode de réalisation de l'invention, et trois connecteurs amovibles respectivement compatibles avec trois types différents de bras d'actionnement.
La figure 17 montre en détail un premier connecteur de la figure 16 couplé à son bras d'actionnement ; cette première variante de connecteur étant de type rotatif, le bras associé étant à axe de pivotement latéral.
La figure 18 fait apparaître en détail le balai d'essuie-glace plat de la figure 16, avant assemblage de l'ensemble de la figure 17.
La figure 19 représente l'ensemble de la figure 17 et le balai d'essuie-glace plat de la figure 18, une fois assemblés.
La figure 20 illustre en perspective avant de dessus un second connecteur de la figure 16, couplé à son bras d'actionnement ; cette seconde variante de connecteur étant un connecteur à crochet, le bras associé étant un bras crochet.
La figure 21 constitue une vue similaire à la figure 20, mais en perspective de dessous.
La figure 22 est une vue en coupe longitudinale du balai d'essuie-glace plat de la figure 18.
La figure 23 est une vue similaire à la figure 22, mais après assemblage avec l'ensemble des figures 20 et 21.
La figure 24 illustre en perspective de dessus un support de liaison d'un balai d'essuie-glace plat qui est conforme à un troisième mode de réalisation de l'invention.
La figure 25 représente en perspective de dessus la partie avant d'un connecteur amovible qui est compatible avec le support de liaison de la figure 24.
La figure 26 est une vue partielle et en coupe longitudinale du support de liaison de la figure 24 et du connecteur amovible de la figure 25, une fois leur emboîtement complètement réalisé.
La figure 27 illustre en perspective de dessus un support de liaison d'un balai d'essuie-glace plat qui est conforme à un quatrième mode de réalisation de l'invention.
La figure 28 représente en perspective de dessous un connecteur amovible qui est compatible avec le support de liaison de la figure 27.
La figure 29 est une vue de côté montrant le support de liaison de la figure 27 et le connecteur amovible de la figure 28, une fois leur emboîtement complètement réalisé.
La figure 30 constitue une vue similaire à la figure 29, mais en coupe transversale.
La figure 31 illustre en perspective la partie arrière d'un connecteur conforme à un cinquième mode de réalisation de l'invention.
La figure 32 représente en perspective la partie arrière d'un support de liaison conforme au cinquième mode de réalisation de l'invention.
La figure 33 montre l'assemblage entre le connecteur de la figure 31 et le support de liaison de la figure 32.
La figure 34 fait apparaître une variante du cinquième mode de réalisation de l'invention.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

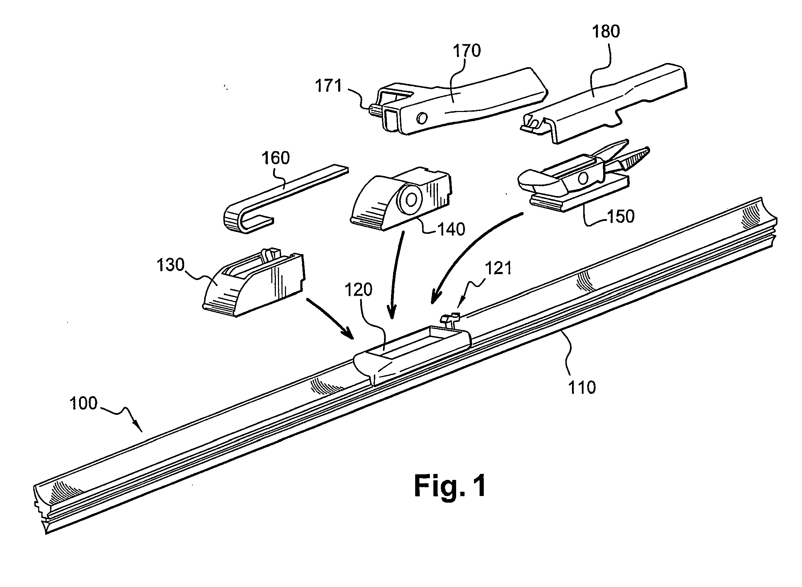

Les figures 1 à 15 illustrent un balai d'essuie-glace plat 100 qui est destiné à équiper un système d'essuie-glace de véhicule automobile, et qui est conforme à un premier mode de réalisation de l'invention. Ce balai d'essuie-glace plat 100 est classiquement doté d'une lame d'essuyage 110 sur laquelle est monté un support de liaison 120 destiné au raccordement dudit balai d'essuie-glace plat 100.

Dans ce mode particulier de réalisation, choisi uniquement à titre d'exemple, la lame d'essuyage 110 se présente sous la forme d'un profilé souple en élastomère, dans lequel est intégrée une structure flexible chargée d'en assurer le maintien.

Le profilé souple se compose principalement d'une lèvre qui est destinée à coopérer directement par contact glissant avec une surface à essuyer, ainsi que d'un talon qui forme interface entre ladite lèvre et la structure flexible.

La structure flexible en question est quant à elle constituée par deux languettes métalliques élastiquement déformables qui sont intégrées longitudinalement, respectivement au niveau de chaque face du profilé souple. Chaque languette, appelée communément vertèbre, est chargée de répartir la pression d'appui de façon homogène sur toute la longueur de la lame d'essuyage 110 dans le but d'optimiser la qualité d'essuyage.

De manière classique, le profilé souple et les deux vertèbres sont solidarisées ensemble par l'intermédiaire du support de liaison 120. Ce dernier est dans ce but communément doté de griffes qui viennent enserrer les deux vertèbres au niveau de la zone centrale du balai plat 100. Pour pouvoir garantir la tenue de l'ensemble, le support de liaison 120 se doit présenter une grande rigidité, et c'est pourquoi il est ici réalisé en zamak.

Conformément à l'objet de la présente invention, le support de liaison 120 du balai d'essuie-glace plat 100 est apte à être solidarisé rigidement et de manière amovible à un connecteur 130, 140, 150 qui est lui-même en mesure d'être couplé de manière amovible à un bras d'actionnement 160, 170, 180.

Ainsi qu'on peut le voir sur l'exemple de la figure 1, ce sont même trois types de connecteurs distincts qui peuvent être coupler au balai plat. On distingue tout d'abord un connecteur à crochet 130 destiné à être couplé avec un bras crochet 160. On trouve ensuite un connecteur rotatif 140 et son bras 170 à axe de pivotement latéral 171. On observe enfin un connecteur clipsable 150 et le bras d'actionnement à clipsage longitudinal associé 180.

Selon une particularité de l'invention, le support de liaison 120 est apte à être solidarisé au connecteur amovible 130, 140, 150 par clipsage. A cet égard, il est entendu que conformément à l'usage, le terme clipsage désigne toute technique d'assemblage par déformation. Plus précisément, il s'agit d'un emboîtement avec déformation élastique qui est de nature à réaliser une fixation rigide mais réversible. Quoi qu'il en soit, le clipsage présente l'avantage de constituer une technique d'assemblage rapide, simple à mettre en oeuvre et fiable.

Selon une autre particularité de l'invention, le support de liaison 120 est en mesure de s'emboîter au moins partiellement avec le connecteur 130, 140, 150, et il est doté par ailleurs de moyens de verrouillage 121 qui sont à même de maintenir ledit élément de liaison 120 et ledit connecteur 130, 140, 150 en position complètement emboîtée.

Dans ce principe d'assemblage, la finalité de l'emboîtement est d'assurer un bon positionnement relatif entre le support de liaison 120 et le connecteur 130, 140, 150. Le rôle des moyens de verrouillage 121 est quant à lui de garantir l'immobilisation de ces deux éléments 120, 130, 140, 150 l'un par rapport à l'autre.

Il est à noter en outre que l'emboîtement entre le support de liaison 120 et le connecteur 130, 140, 150 peut s'effectuer suivant une direction quelconque, c'est-à-dire longitudinale, transversale, ou oblique.

De manière particulièrement avantageuse, l'emboîtement entre le support de liaison 120 et le connecteur 130, 140, 150 est réalisé suivant une direction déterminée. Par ailleurs, l'ensemble est ménagé de manière à ce que les moyens de verrouillage 121 soient en mesure de bloquer la mobilité relative entre ledit élément de liaison 120 et ledit connecteur 130, 140, 150, suivant la direction d'emboîtement.

Il est à noter que la locution "direction d'emboîtement" doit s'entendre au sens large du terme, c'est-à-dire qu'elle désigne très généralement la trajectoire correspondant au mouvement relatif qui permet l'emboîtement entre le support de liaison 120 et le connecteur 130, 140, 150. Le mouvement relatif en question peut être un mouvement linéaire, un mouvement circulaire, ou une quelconque combinaison de ces mouvements.

L'immobilisation du connecteur 130, 140, 150 par rapport au support de liaison 120 est obtenue grâce à l'action combinée de l'emboîtement et du verrouillage. Cela signifie en d'autres termes que dans ce mode de réalisation, les moyens de verrouillage 121 ne sont pas en mesure d'assurer seuls l'immobilisation du connecteur 130, 140, 150 par rapport au support de liaison 120.

Selon une autre particularité de l'invention, le support de liaison 120 est en mesure de s'emboîter ponctuellement avec une première partie du connecteur 130, 140, 150. Les moyens de verrouillage 121 sont quant à eux à même de maintenir localement une seconde partie du connecteur 130, 140, 150. L'ensemble est par ailleurs agencé de manière à ce que la seconde partie soit positionnée sensiblement en opposition par rapport à la première.

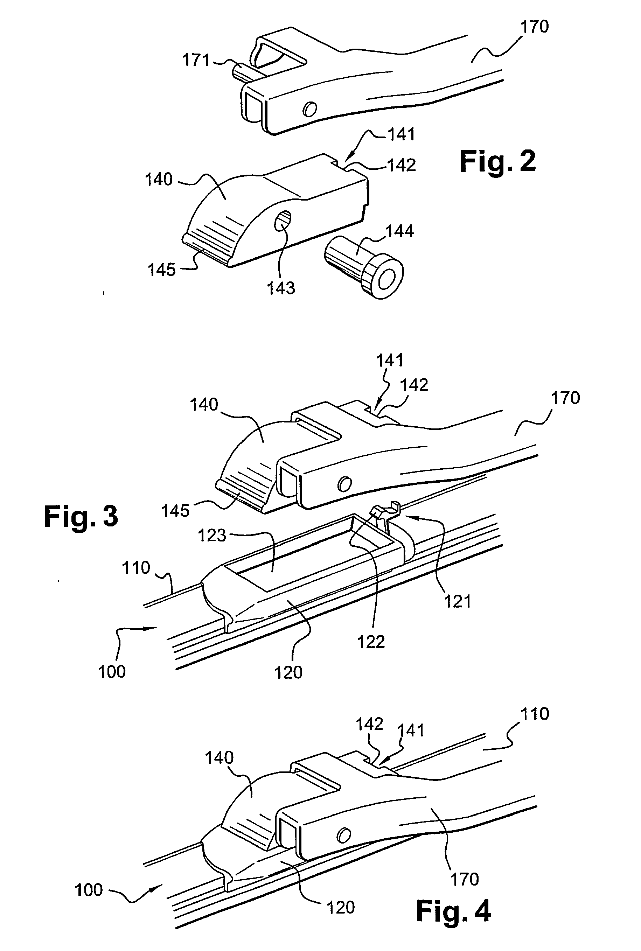

Ainsi qu'on peut le voir plus clairement à la figure 3, les moyens de verrouillage 121 sont dotés ici d'un élément de blocage 122 qui est tout d'abord en mesure de se déformer élastiquement afin de permettre l'emboîtement entre le support de liaison 120 et le connecteur 140, dit emboîtement principal. Mais cet élément de blocage 122 est également à même de coopérer par emboîtement bloquant avec une portion 142 sensiblement complémentaire du connecteur 140, une fois l'emboîtement principal complètement réalisé. L'ensemble est agencé de manière à ce que l'emboîtement bloquant entre l'élément de blocage 122 et la portion correspondante 142 du connecteur 140 s'effectue suivant une direction sensiblement perpendiculaire à celle de emboîtement principal, bloquant ainsi la mobilité relative entre le connecteur 140 et le support de liaison 120.

Dans cet exemple particulier de réalisation, l'élément de blocage 122 est constitué par une languette élastiquement déformable dont l'extrémité libre présente une forme de crochet. Cette languette est ménagée en partie médiane à l'arrière du support de liaison 120, et elle s'étend perpendiculairement par rapport au plan du balai d'essuie-glace plat 100, c'est-à-dire de manière sensiblement parallèle à la direction de l'emboîtement principal.

La figure 2 illustre plus en détail le connecteur rotatif 140 qui, dans cette première variante de réalisation, est destiné à coupler le bras 170 à axe de pivotement latéral 171 ici représenté, avec le balai d'essuie-glace plat 100 précédemment décrit.

Selon une particularité de l'invention, ce connecteur 140 est en mesure, d'une part, d'être solidarisé rigidement et de manière amovible au support de liaison 120 du balai d'essuie-glace plat 100, et d'autre part, d'être couplé de manière amovible au bras d'actionnement 170 qui lui est associé.

Il est entendu que le couplage entre le connecteur rotatif 140 et le bras d'actionnement associé 170 doit s'entendre ici comme un montage mobile en pivotement dudit connecteur 140 par rapport audit bras d'actionnement 170. Conformément à la figure 2, le connecteur rotatif 140 est à cet effet doté classiquement d'un alésage borgne 143 dans lequel vient s'insérer un palier 144 qui est à même de recevoir l'axe de pivotement 171 ménagé latéralement à l'extrémité du bras d'actionnement 170. Le montage correspondant est visible à la figure 3 qui représente le tout début de la phase d'assemblage avec le balai d'essuie-glace plat 100.

On observe que le connecteur 140 est ici apte à être couplé uniquement à un bras d'actionnement 170 porteur d'un axe de pivotement latéral 171. Cependant, et conformément à une caractéristique avantageuse de l'invention, un même connecteur 130, 140, 150 pourrait très bien être en mesure d'être couplé alternativement, c'est-à-dire tour à tour, à au moins deux types différents de bras d'actionnement 160, 170, 180.

De manière fort logiquement comparable à ce qui a été dit précédemment dans le cadre de la description des caractéristiques du balai d'essuie-glace plat 100, le connecteur rotatif 140 est ici en mesure d'être solidarisé au support de liaison 120 par clipsage.

De la même façon, le connecteur rotatif 140 est à même de s'emboîter au moins partiellement avec le support de liaison 120, et il comporte par ailleurs des moyens de fixation 141 qui sont aptes à le maintenir en position complètement emboîtée avec ledit support de liaison 120.

Les remarques faites lors de la description du balai d'essuie-glace plat 100, concernant le rôle de l'emboîtement, la finalité des moyens de verrouillage 121 et la direction d'emboîtement, s'appliquent bien évidemment ici à l'identique à propos du connecteur associé 140.

Selon une autre particularité de l'invention, l'emboîtement entre le connecteur 140 et le support de liaison 120 est réalisé suivant une direction déterminée. Et par ailleurs, l'ensemble est ménagé de manière à ce que les moyens de fixation 141 soient à même de bloquer la mobilité relative entre le connecteur 140 et l'élément de liaison 120, suivant la direction d'emboîtement.

Les observations mentionnées lors de la description du balai d'essuie-glace plat 100, concernant la nature du mouvement relatif d'emboîtement et l'immobilisation par les moyens de verrouillage 121, sont à nouveau pertinentes ici.

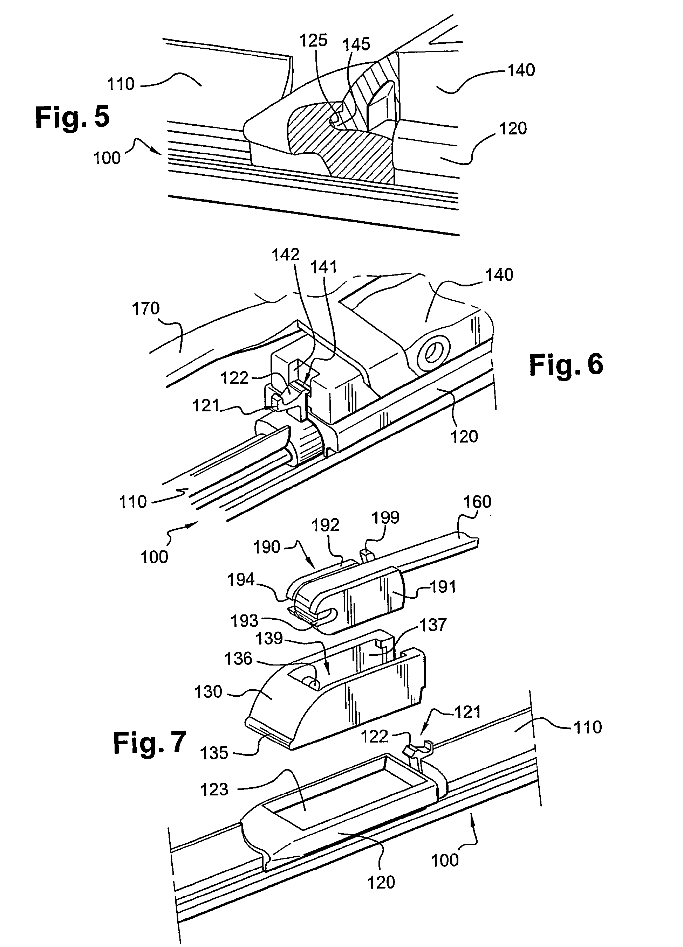

Conformément à une autre caractéristique comparable à l'une des particularités techniques du balai d'essuie-glace plat 100, le connecteur rotatif 140 est en mesure de s'emboîter ponctuellement avec une première partie du support de liaison 120 (figure 5). Par ailleurs, les moyens de fixation 141 sont à même de maintenir localement une seconde partie du support de liaison 120 (figure 6). Et l'ensemble est agencé de manière à ce que la seconde partie soit positionnée sensiblement en opposition par rapport à la première.

Ainsi qu'on peut le voir notamment à la figure 6, les moyens de fixation 141 ménagés sur le connecteur rotatif 140 sont composés ici d'un élément d'ancrage 142 qui est en mesure de coopérer par emboîtement bloquant avec une portion sensiblement complémentaire d'un élément élastiquement déformable 122 solidaire dudit support de liaison 120. L'ensemble est agencé de manière à ce que l'emboîtement bloquant en question, d'une part, intervienne dès lors que l'emboîtement principal entre le connecteur 140 et le support de liaison 120 est complètement réalisé, et d'autre part, qu'il s'effectue alors suivant une direction sensiblement perpendiculaire à celle dudit emboîtement principal.

Dans cet exemple particulier de réalisation, l'élément d'ancrage 142 est constitué par un logement qui est ménagé en partie médiane, à l'arrière du connecteur 140. Ce logement est conformé afin de pouvoir servir de zone d'appui et de blocage à un quelconque élément de blocage élastiquement déformable 122, de forme appropriée, qui serait solidaire du support de liaison 120 du balai d'essuie-glace plat 100.

Les figures 3 à 6 illustrent plus particulièrement l'assemblage entre le connecteur rotatif 140 et le support de liaison 120 du balai d'essuie-glace plat 100 de ce premier mode de réalisation de l'invention.

Concrètement, le support de liaison 120 est doté à sa partie supérieure d'un logement, formant réceptacle 123, dont la forme est sensiblement complémentaire de la partie inférieure du connecteur rotatif 140. Le rebord délimitant le réceptacle 123 est destiné tout autant à guider l'engagement du connecteur rotatif 140, qu'à contribuer à son maintien grâce à l'effet d'emboîtement qu'il permet de générer.

Une gorge transversale 125 est par ailleurs ménagée à l'intérieur du réceptacle 123, au niveau de du bord avant pour être précis (figure 5). Elle est destinée à participer à l'emboîtement ponctuel entre le connecteur rotatif 140 et le support de liaison 120.

L'élément de blocage élastiquement déformable 122, qui est chargé d'immobiliser le connecteur rotatif 140 dans sa position emboîtée avec le support de liaison 120, est ménagé en partie médiane à l'arrière dudit support de liaison 120, parallèlement au plan sagittal du balai d'essuie-glace plat. L'ensemble est agencé de manière à ce que l'extrémité libre de l'élément de blocage 122 s'étende en regard de la zone arrière du réceptacle 123.

Le connecteur 140 est quant à lui doté au niveau de sa partie avant d'un épaulement transversal 145 dont la forme est sensiblement complémentaire de celle de la gorge 125 du support de liaison 120. Il dispose également d'un logement, formant élément d'ancrage 142, mais il est quant à lui ménagé en partie arrière. Ce logement d'ancrage est conformé de manière à pouvoir s'emboîter avec l'extrémité libre, formant crochet, de l'élément de blocage 122.

Conformément à la figure 3, l'assemblage entre le connecteur rotatif 140 et le support de liaison 120 du balai d'essuie-glace plat 100 débute par la descente dudit connecteur rotatif 140 à l'aplomb du réceptacle 123 (figure 3). A la fin de ce mouvement relatif d'approche, le connecteur rotatif 140 est incliné légèrement sur l'avant, afin de permettre l'engagement de l'épaulement transversal 145 dans la gorge 125 qui lui est associée (figure 5).

La partie arrière du connecteur rotatif 140 est ensuite basculée vers le bas de manière à terminer l'emboîtement. Durant cette opération, cette extrémité arrière rentre en contact avec l'extrémité libre de l'élément de blocage 122. Mais comme cette dernière s'étend en regard du réceptacle 123, c'est tout l'élément de blocage 122 qui est amené à se déformer élastiquement pour permettre le passage du connecteur rotatif 140.

Une fois l'emboîtement entre le support de liaison 120 et le connecteur 140 complètement réalisé, l'élément de blocage élastiquement déformable 122 va pouvoir reprendre sa forme initiale. Son extrémité libre vient alors s'emboîter dans le logement d'ancrage 142 suivant un mouvement sensiblement longitudinal par rapport au balai (figure 6), réalisant ainsi le blocage de la partie arrière du connecteur 140 conformément à la figure 4.

Les figures 7 à 11 illustrent une seconde variante de ce premier mode de réalisation. Elle se différencie par le fait qu'elle est adaptée à un bras d'actionnement de type crochet.

On retrouve donc le même balai d'essuie-glace plat 100, et seul le connecteur 130 est structurellement différent de ce qui a été décrit précédemment puisqu'il est spécifique à cette nouvelle sorte de bras-balai 160. Les différences structurelles sont toutefois limitées à la partie du connecteur 130 qui est directement impliquée dans le couplage avec le bras crochet 160. Elles ne touchent donc pas la partie la plus inférieure du connecteur 130, qui est uniquement destinée à participer à l'assemblage avec le support de liaison 120. Pour toutes ces raisons, seuls seront décrits en détail les éléments intervenant directement dans la liaison entre le connecteur à crochet 130 et le bras crochet 160.

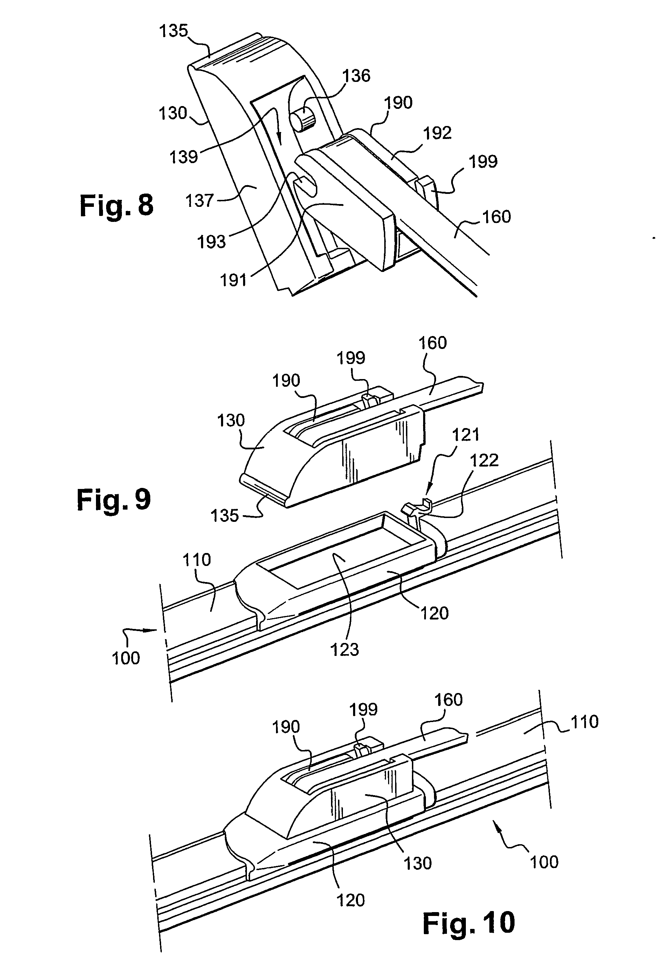

De manière tout à fait classique, le couplage entre le connecteur 130 et le bras crochet 160 s'effectue par l'intermédiaire d'un adaptateur 190. Il s'agit concrètement d'une pièce d'articulation intermédiaire qui vient, d'une part, se fixer rigidement à l'extrémité du bras d'actionnement 160 (figure 7), et d'autre part, se monter mobile en pivotement par rapport au connecteur (figure 8).

Ainsi qu'on peut le voir sur les figures 7 et 8, l'adaptateur 190 se présente sous la forme de deux flasques 191 reliés symétriquement ensemble par un élément en U qui est en mesure de s'emboîter à l'intérieur du crochet ménagé à l'extrémité du bras d'actionnement 160 (figure 7). On observe par ailleurs que les deux flasques 191, 192 sont respectivement pourvus de deux logements 193, 194 qui débouchent longitudinalement au niveau de leurs extrémités avants et qui sont respectivement à même de s'engager autour de deux tourillons 136 ménagés à l'intérieur des flancs 137 du connecteur à crochet 130. L'ensemble est agencé de manière à ce que, une fois cet emboîtement réalisé, l'adaptateur 190 soit en mesure de pivoter longitudinalement dans le connecteur 130.

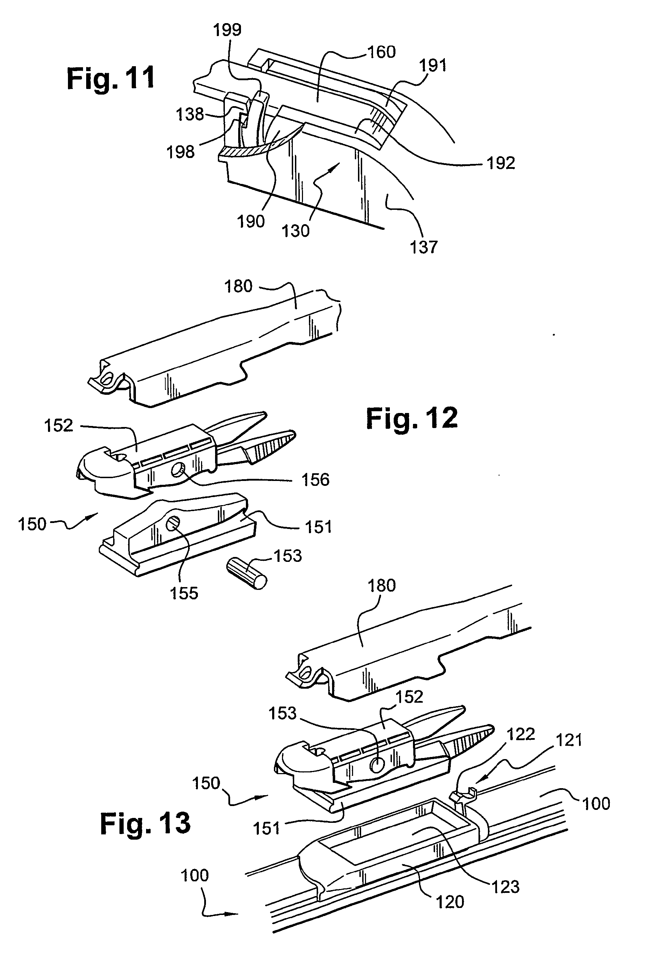

Conformément à la figure 11, un verrouillage est réalisé dès basculement de l'adaptateur 190 à l'intérieur du connecteur 130. Ce résultat est obtenu grâce à l'action d'un système de butées qui fait intervenir une première butée 138 solidaire du connecteur 130, ainsi et une seconde butée 198 ménagée le long d'une languette élastiquement déformable 199 qui est solidaire de l'adaptateur 190.

Concrètement, lorsque l'adaptateur 190 est entraîné en basculement à l'intérieur du connecteur 130, cela provoque dans un premier temps l'effacement de la languette 199 par déformation élastique. La seconde butée 198 est alors à même de contourner son homologue du connecteur 130, au fur et à mesure que l'adaptateur 190 pivote. L'encliquetage de l'adaptateur 190 dans le connecteur 130 devient effectif dès lors que la languette 199 a repris sa position de repos initiale, c'est-à-dire après croisement complet des butées 198, 199.

L'ensemble est toutefois agencé de manière à ce qu'une fois emboîté et verrouillé à l'intérieur du connecteur 130, l'adaptateur 190 bénéficie toujours d'une certaine mobilité en pivotement. L'amplitude du déplacement est simplement limité angulairement par le système de butées précédemment décrit.

Ainsi qu'on peut le voir sur les figures 7 à 11, l'extrémité libre de la languette 199 dépasse par rapport à la face supérieure de l'adaptateur 190. Le but est qu'elle demeure manuellement accessible, même lorsque l'adaptateur 190 est encliqueté dans le connecteur 130 (figures 9 à 11). Cette caractéristique trouve toute sa justification lorsqu'il s'agit de désassembler le connecteur 130 et le bras crochet 160 qui lui est associé.

Ce mode de réalisation s'avère au final extrêmement avantageux d'un point de vue esthétique, dans la mesure où il permet de réduire significativement les dimensions de l'ouverture 139 qui est ménagée à la partie supérieure du connecteur 130 pour permettre l'insertion de l'adaptateur 190 couplé au bras crochet 160 (figure 8). En effet, dans les systèmes d'assemblage à crochet de l'état de la technique, la longueur de l'ouverture 139 est toujours sensiblement plus grande que celle de l'adaptateur 190, afin de laisser suffisamment de place lors du montage pour le passage du bras d'actionnement de part en part le connecteur 130. Or cela n'est plus du tout nécessaire ici vu que l'insertion du bras 160 est totalement directe par rapport aux tourillons 136. Dans l'absolu, il est ainsi tout à fait envisageable d'utiliser une ouverture 139 dont les dimensions correspondent à celles de l'adaptateur 190, majorées simplement par les valeurs des jeux de fonctionnement.

Les figures 9 et 10 illustrent l'assemblage entre le connecteur à crochet 130 et le balai d'essuie-glace plat 100. Les commentaires relatifs à cette opération sont les mêmes que ceux formulés en regard des figures 3 et 4.

Les figures 12 à 15 représentent quant à elles une troisième variante du premier mode de réalisation. Elle se singularise par le fait qu'elle est adaptée à un bras d'actionnement 180 à clipsage longitudinal.

Comme pour la seconde variante, seul le connecteur 150 présente des différences structurelles par rapport à ce qui a été décrit précédemment, puisqu'il est ici de type clipsable. Mais une nouvelle fois, les différences structurelles en question sont limitées à la partie du connecteur 150 qui est directement impliquée dans le couplage avec le bras à clipsage longitudinal 180. Ce sont par conséquent uniquement celles-ci qui vont être décrites plus avant.

Ainsi qu'on peut le voir sur la figure 12, le connecteur 150 est principalement composé de deux éléments 151, 152 qui sont montés transversalement pivotants l'un par rapport à l'autre par l'intermédiaire d'un axe 153. L'élément inférieur 151 du connecteur 150 forme une interface avec le support de liaison 120 du balai d'essuie-glace plat 100, tandis que l'élément supérieur 152 constitue une interface avec le bras à clipsage longitudinal 180. L'articulation entre le balai d'essuie-glace plat 100 et le bras d'actionnement 180 s'effectue donc ici au niveau de la structure intrinsèque du connecteur (figure 13).

L'élément inférieur 151 du connecteur 150 n'appelle pas de commentaires particuliers, si ce n'est qu'il est conformé de manière à pouvoir être solidarisé au support de liaison 120 du balai d'essuie-glace plat 100, conformément au principe d'assemblage commun déjà décrit. On précisera simplement qu'un alésage traversant 155 est ménagé transversalement dans le but de recevoir l'axe de pivotement 153(figure 12).

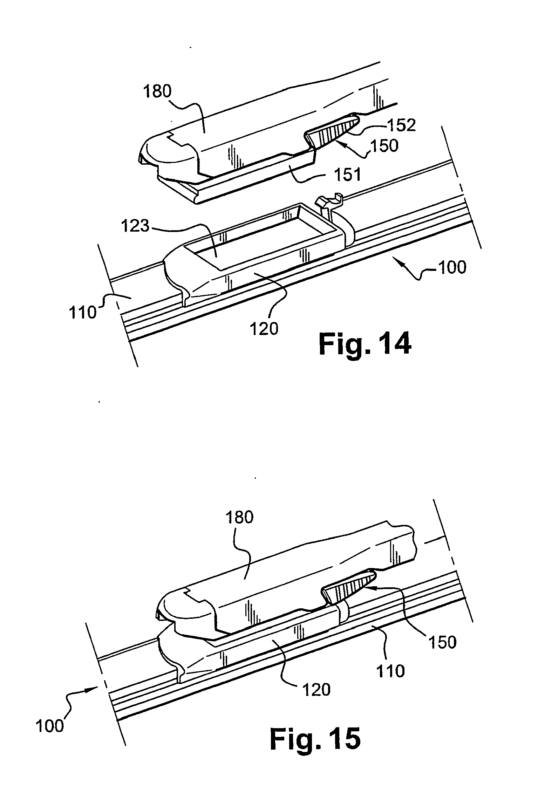

L'élément supérieur 152 du connecteur 150 se présente quant à lui sous la forme d'une classique fixation pour bras à clipsage longitudinal 180, en ce sens qu'elle est en tout point conforme aux fixations qui sont directement intégrées à certains balais d'essuie-glace plats de l'état de la technique. C'est pourquoi elle ne sera pas décrite davantage ici, tout comme l'opération permettant son couplage avec l'extrémité du bras à clipsage longitudinal 180 (figures 13 et 14). On notera toutefois que l'élément supérieur 152 est par ailleurs doté de deux alésages traversants 156 (figure 12) qui sont destinés à venir se positionner en regard de l'alésage traversant 155 de l'élément inférieur 151, afin de venir supporter les extrémités de l'axe de pivotement 153.

Les figures 14 et 15 illustrent l'assemblage entre le connecteur 150 et le balai d'essuie-glace plat 100. Les remarques relatives à cette opération sont identiques à celles établies au cours des descriptions des autres variantes.

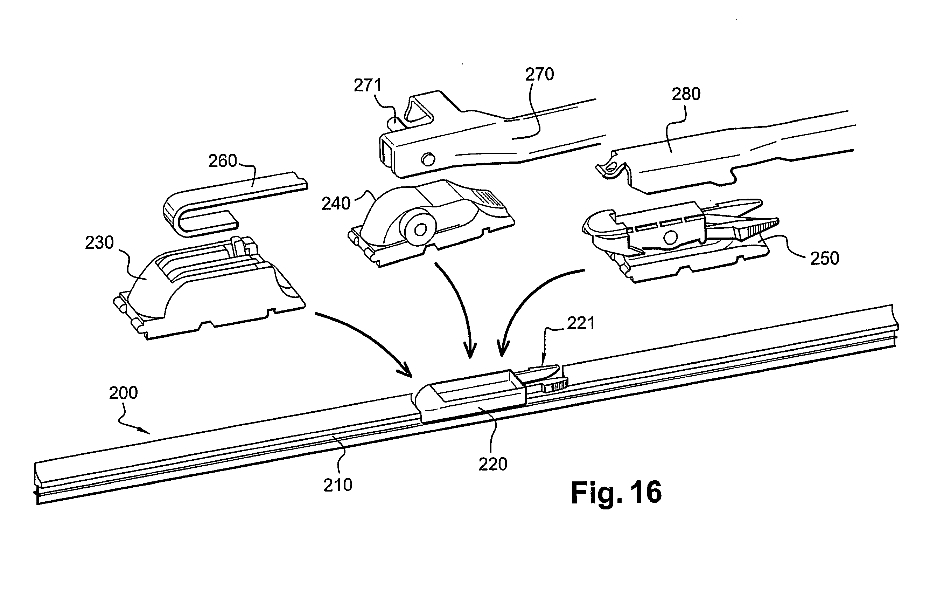

Les figures 16 à 23 illustrent un dispositif d'essuyage qui est conforme à un second mode de réalisation de l'invention, bien que toujours destiné à équiper un système d'essuie-glace de véhicule automobile. Par rapport à son homologue du premier mode de réalisation précédemment décrit, le balai d'essuie-glace plat 200 diffère essentiellement au niveau des moyens de verrouillage 221 dont est pourvu son support de liaison 220. Cette caractéristique a bien entendu une incidence majeure sur la structure des différents types de connecteurs 230, 240, 250 potentiellement associables, et notamment leurs moyens d'assemblage.

Ainsi qu'on peut le voir sur l'exemple de la figure 16, le balai d'essuie-glace plat 200 est ici aussi à même d'être monté indifféremment aux extrémités respectives d'un bras crochet 260, d'un bras 270 à axe de pivotement latéral 271, et d'un bras à clipsage longitudinal 280. Le connecteur à crochet 230, le connecteur rotatif 240 et le connecteur clipsable 250 nécessaires à ces différentes possibilités de montages, présentent des similitudes structurelles et fonctionnelles avec leurs homologues du premier mode de réalisation. Les principes de couplage entre chaque type de bras d'actionnement 260, 270, 280 et le connecteur amovible associé 230, 240, 250 sont en effet parfaitement identiques. Pour cette raison, ces aspects de couplage ne seront pas décrits à nouveau ici.

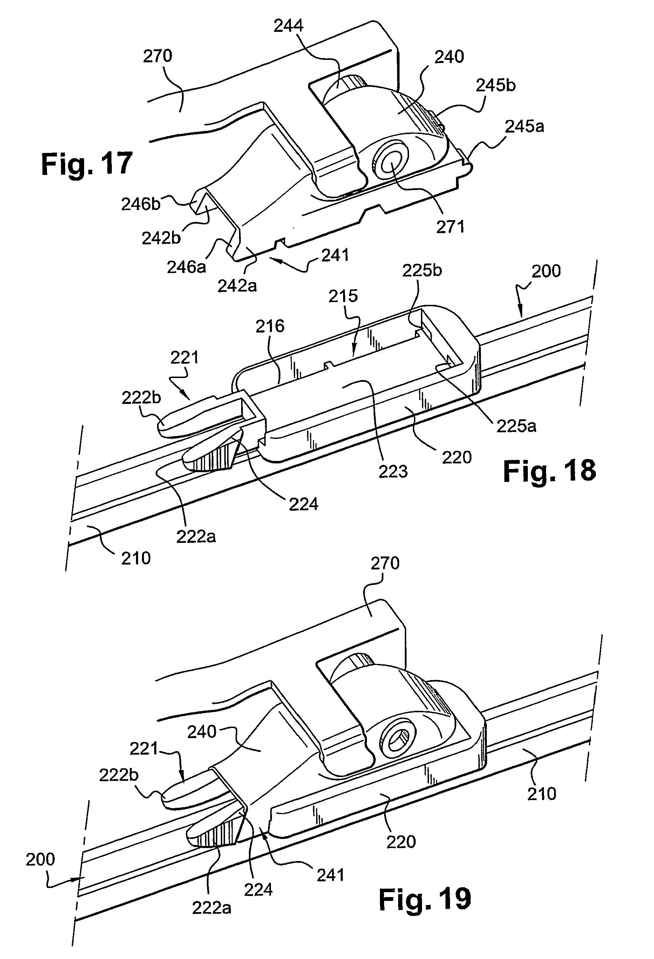

Conformément à la figure 17, le connecteur rotatif 240 de ce second mode de réalisation est pourvu de moyens de fixation 241 qui comportent deux éléments d'ancrage 242a, 242b se présentant sous la forme de bords d'appui 246a, 246b, formant butées. Ils sont ménagés dans le prolongement des flancs latéraux du connecteur 240 et s'étendent longitudinalement vers l'arrière, en vue de coopérer par emboîtement bloquant avec respectivement deux éléments de blocage élastiquement déformables 222a, 222b solidaires du support de liaison 220 . L'ensemble est par ailleurs agencé de manière à ce que l'emboîtement bloquant en question, d'une part, intervienne dès lors que l'emboîtement principal entre le connecteur 240 et le support de liaison 220 est complètement réalisé, et d'autre part, s'effectue suivant une direction sensiblement perpendiculaire à celle dudit emboîtement principal.

La figure 18 fait quant à elle apparaître les particularités structurelles du balai d'essuie-glace plat 200. Il est à noter que ces dernières concernent uniquement certaines parties du support de liaison 220, la lame d'essuyage 210 demeurant parfaitement identique.

Si l'on ne s'intéresse qu'aux différences par rapport au premier mode de réalisation précédemment décrit, on remarque tout d'abord que la gorge transversale 145 ménagée à l'avant du réceptacle 143 a laissé sa place à deux cavités d'ancrage 225a, 225b de fonction identique (figure 18). Cela sous-entend bien évidemment que l'épaulement transversal 145 ménagé à l'avant du connecteur 140 a été remplacé ici par deux ergots saillants 245a, 245b ainsi qu'on peut l'apercevoir à la figure 17. Ces ergots saillants 245a, 245b présentent avantageusement des formes sensiblement complémentaires de celles des cavités d'ancrage 225a, 225b correspondantes.

On observe ensuite que les moyens de verrouillage 221, ménagés sur le support de liaison 220, sont composés ici de deux éléments de blocage 222a, 222b qui se présentent sous la forme de pattes élastiquement déformable, formant crochets. Ces pattes 222a, 222b sont solidaires de la partie arrière du support de liaison 220 et elles s'étendent longitudinalement vers l'arrière, afin de pouvoir coopérer par emboîtement bloquant avec les deux éléments d'ancrage 242a, 242b du connecteur rotatif 240. L'ensemble est par ailleurs agencé de manière à ce que l'emboîtement bloquant en question, d'une part, intervienne dès lors que l'emboîtement principal entre le connecteur 240 et le support de liaison 220 est complètement réalisé, et d'autre part, s'effectue suivant une direction sensiblement perpendiculaire à celle dudit emboîtement principal.

L'assemblage entre le connecteur rotatif 240 et le support de liaison 220 du balai d'essuie-glace plat 200 débute par la descente dudit connecteur rotatif 240 à l'aplomb du réceptacle 223. A la fin de ce mouvement relatif d'approche, le connecteur rotatif 240 est incliné légèrement sur l'avant afin de permettre l'engagement des ergots saillants 245a, 245b dans les cavités d'ancrage 225a, 225b associées.

La partie arrière du connecteur rotatif 240 est ensuite basculée vers le bas de manière à terminer l'emboîtement. Durant cette opération, les deux bords d'appui 246a, 246b des moyens de fixation 241 vont rentrer respectivement en contact avec les deux pattes flexibles 222a, 222b des moyens de verrouillage 221, contraignant ainsi ces dernières à s'effacer vers l'intérieur par déformation élastique dans un plan sensiblement perpendiculaire au plan sagittal du balai plat 200. Il est à noter que cette étape est facilitée par la présence de chanfreins externes 224 qui sont ménagés à la partie supérieure des extrémités libres des pattes flexibles 222a, 222b.

Une fois l'emboîtement entre le support de liaison 220 et le connecteur 240 complètement réalisé, les éléments de blocage 222a, 222b reprennent leurs places initiales, toujours par déformation élastique. Leurs extrémités libres s'emboîtent alors transversalement avec les éléments d'ancrage 242a, 242b, réalisant ainsi la blocage de la partie arrière du connecteur 240. Cet effet, combiné à l'emboîtement réalisé en partie avant, assure alors avantageusement l'immobilisation totale du connecteur 240 conformément à la figure 19.

Le démontage s'effectue simplement en exerçant des forces de pression simultanément sur les extrémités libres des deux pattes flexibles 222a, 222b jusqu'au désengagement de ces dernières par rapport au bords d'appui 246a, 246b. Il suffit alors de désemboîter le connecteur 240 en faisant dans un premier temps basculer vers le haut sa partie la plus arrière, afin de permettre dans un second temps le désengagement en partie avant.

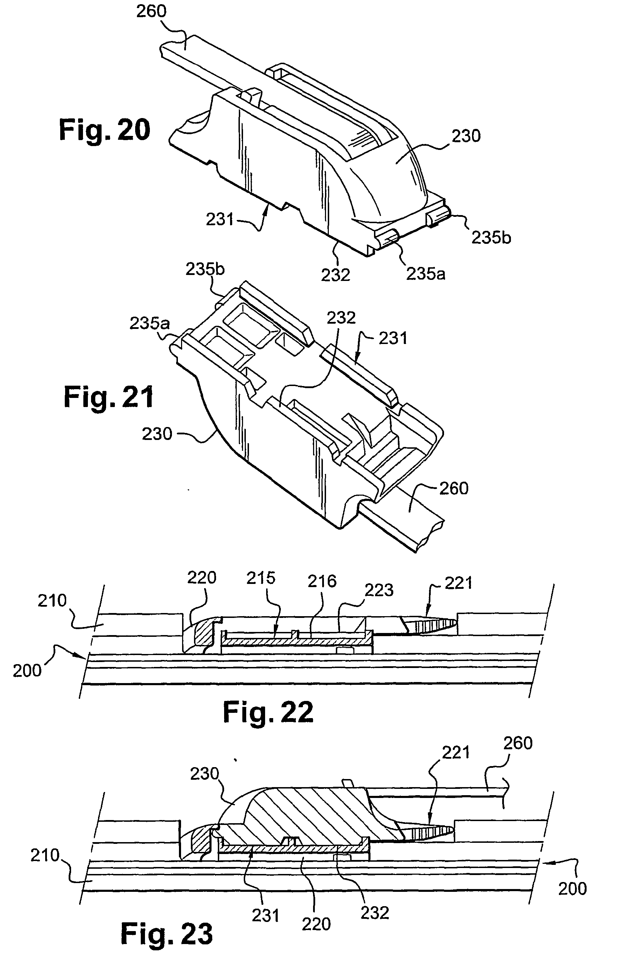

Les figures 20 à 23 illustrent une seconde variante de ce deuxième mode de réalisation, dans laquelle un connecteur à crochet 230 est utilisé pour coupler le balai d'essuie-glace plat 200 avec un bras crochet 260.

La partie inférieure du connecteur à crochet 230 ne sera pas décrite davantage ici étant donné qu'elle est absolument identique à celle du connecteur rotatif 240 précédemment décrite, ce qui est par ailleurs parfaitement normal puisqu'elles sont toutes deux adaptées pour être assemblées au même balai d'essuie-glace plat 200. Les figures 20 et 21 permettent toutefois de bien visualiser la forme et l'implantation des ergots saillants 235a, 235b évoqués dans le cadre de la première variante.

Il en sera de même pour la partie supérieure du connecteur à crochet 230 car, bien que logiquement différente de celle du connecteur rotatif 240, elle n'en demeure pas moins tout à fait similaire à celle son homologue du premier mode de réalisation de l'invention.

Les figures 18 et 22 mettent surtout en évidence que, conformément à une caractéristique avantageuse de l'invention, le support de liaison 220 comporte en outre des moyens de centrage 215 qui sont en mesure de positionner et de bloquer transversalement le connecteur 230, une fois l'emboîtement principal entre ledit support de liaison 220 et ledit connecteur 230 complètement réalisé.

De manière particulièrement avantageuse, les moyens de centrage 215 sont dotés d'au moins un élément de centrage 216 qui est à même de s'emboîter avec une partie 232 de forme sensiblement complémentaire ménagée sur le connecteur 230. L'ensemble est par ailleurs agencé de manière à ce que l'emboîtement de centrage s'effectue suivant une direction sensiblement colinéaire à celle de l'emboîtement principal entre le connecteur 230 et le support de liaison 220.

De façon symétrique, ces caractéristiques impliquent tout d'abord que le connecteur à crochet 230 dispose quant à lui de moyens de guidage 231 qui sont en mesure de positionner et de bloquer transversalement le support de liaison 220, une fois l'emboîtement principal entre ledit connecteur 230 et ledit support de liaison 220 complètement réalisé.

Dans cette hypothèse, les moyens de guidage 231 sont avantageusement pourvus d'au moins un élément de guidage 232 qui est à même de s'emboîter avec une partie 216 de forme sensiblement complémentaire ménagée sur le support de liaison 220, suivant une direction sensiblement colinéaire à celle de l'emboîtement principal.

Dans l'exemple de réalisation des figures 18 et 20 à 23, les moyens de centrage 215 sont constitués par quatre rainures longitudinales 216 qui sont ménagées au fond du réceptacle 223, deux à deux le long de chaque bord latéral (figures 18 et 22). Les moyens de guidage 231 sont quant à eux composés de quatre nervures longitudinales 232 qui sont ménagées dans le prolongement des flancs du connecteur 230 (figure 20, 21 et 23), et qui présentent de formes sensiblement complémentaire aux rainures longitudinales 216. L'ensemble est bien sûr agencé de manière à ce que les rainures 216 et les nervures 232 puissent s'engager les unes dans les autres lors de l'emboîtement principal (figure 23).

Bien entendu, tous autres éléments de formes complémentaires pourraient être utilisés de manière équivalente pour constituer les moyens de centrage et les moyens de guidage, comme par exemple une association de plots et d'alésages.

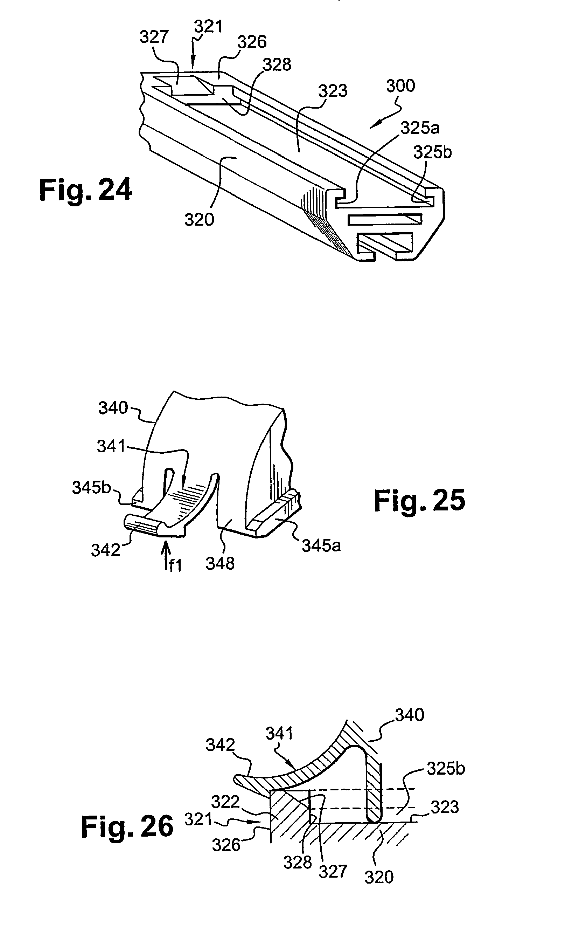

La figure 24 illustre un support de liaison 320 d'un balai d'essuie-glace plat 300 conforme à un troisième mode de réalisation de l'invention. Il est à noter que même si cela n'apparaît pas directement sur les figures, le support de liaison 320 est parfaitement compatible avec tout type de connecteur amovible 340 conforme à l'invention, et notamment un connecteur à crochet, un connecteur rotatif, un connecteur clipsable, etc.

Ainsi qu'on peut le voir en détail sur cette figure 24, le support de liaison 320 se présente sous la forme d'un profilé dont la partie supérieure, formant réceptacle 323, est délimitée latéralement par deux glissières 325a, 325b positionnées en vis-à-vis l'une de l'autre. La partie avant du réceptacle 323 est bordée par un rebord transversal 326 formant butée, tandis que la partie arrière demeure ouverte afin de ménager un accès longitudinal au réceptacle 323 et aux glissières 325a, 325b.

Selon une particularité de ce troisième mode de réalisation de l'invention, les moyens de verrouillage 321 portés par le support de liaison 320 comportent un élément d'ancrage 322 qui est en mesure de coopérer par emboîtement bloquant avec une portion sensiblement complémentaire d'un élément élastiquement déformable 342 qui est solidaire du connecteur 340. L'ensemble est par ailleurs agencé de manière à ce que l'emboîtement bloquant en question s'effectue une fois l'emboîtement dit principal entre le connecteur 340 et le support de liaison 320 complètement réalisé, et suivant une direction sensiblement perpendiculaire à celle dudit emboîtement principal.

Dans cet exemple particulier de réalisation, l'élément d'ancrage 322 est constitué par le rebord avant 326 qui délimite transversalement le réceptacle 323 du support de liaison 320 (figure 26).

La figure 25 montre quant à elle que chaque flanc du connecteur amovible 340 est pourvu d'une nervure longitudinale 345a, 345b qui s'étend perpendiculairement au plan sagittal dudit connecteur amovible 340, et dont la forme est sensiblement complémentaire de celle de chaque glissière 325a, 325b du support de liaison 320.

Conformément à une caractéristique avantageuse de l'invention, les moyens de fixation 341 ménagés sur le connecteur 340 sont pourvus ici d'un élément de blocage 342 qui est à même de se déformer élastiquement pour permettre l'emboîtement dit principal entre le connecteur 340 et le support de liaison 320. Cet élément de blocage 342 est en outre en mesure de coopérer par emboîtement bloquant avec une portion 322 sensiblement complémentaire du support de liaison 320, une fois l'emboîtement principal complètement réalisé (Figure 26). Enfin, l'ensemble est agencé de manière à ce que l'emboîtement bloquant en question s'effectue suivant une direction sensiblement perpendiculaire à celle de l'emboîtement principal.

Conformément à la figure 25, dans cet exemple particulier de réalisation, l'élément de blocage 342 est constitué concrètement par une languette flexible qui est ménagée au niveau de la partie avant du connecteur amovible 340 et qui s'étend longitudinalement dans le plan sagittal dudit connecteur 340.

Selon une autre particularité du troisième mode de réalisation de l'invention, le support de liaison 320 est en mesure de s'emboîter sur sensiblement toute la longueur du connecteur 340, suivant une direction qui est comprise dans un plan sensiblement perpendiculaire au plan sagittal du balai d'essuie-glace plat 300. Par ailleurs, les moyens de verrouillage 321 sont à même de bloquer la mobilité relative entre le support de liaison 320 et le connecteur 340, suivant leur direction d'emboîtement.

Le fait que le support de liaison 320 et son connecteur associé 340 soient au final emboîtés l'un dans l'autre sur sensiblement toutes leurs longueurs, ne dépend pas directement de la manière dont est réalisé l'emboîtement. Celui-ci peut en effet s'effectuer suivant une direction quelconque, sous réserve toutefois que cette dernière soit comprise dans un plan sensiblement perpendiculaire au plan sagittal du balai d'essuie-glace plat 300. Il en est par exemple ainsi pour un emboîtement longitudinal par l'arrière d'un support de liaison, pour un emboîtement longitudinal par l'avant d'un support de liaison, pour un emboîtement transversal par le côté d'un support de liaison, pour un emboîtement oblique par le côté d'un support de liaison, etc.

Dans le cas présent, l'assemblage entre le connecteur amovible 340 et le support de liaison 320 débute par l'insertion des nervures 345a, 345b dans les glissières 325a, 325b. Le connecteur 340 est ensuite coulissé le long du réceptacle 323 jusqu'à ce que l'extrémité libre de la languette flexible 342 rentre en contact avec une rampe montante 327 ménagée longitudinalement au niveau du rebord avant 326. La poursuite du coulissement génère alors la déformation élastique de l'élément de blocage 342 jusqu'à ce que la face avant 348 du connecteur 340 vienne en butée contre la face d'appui interne 328 du rebord avant 326. A ce moment là, l'extrémité libre de la languette flexible 342 reprend sa place initiale et se verrouille contre le rebord avant 326 conformément à la figure 26. On remarquera que pour démonter le balai d'essuie-glace plat 300, il suffit simplement d'exercer une pression sur l'extrémité de l'élément de blocage (Figure 25, flèche f1), puis de tirer ledit balai 300 vers l'avant.

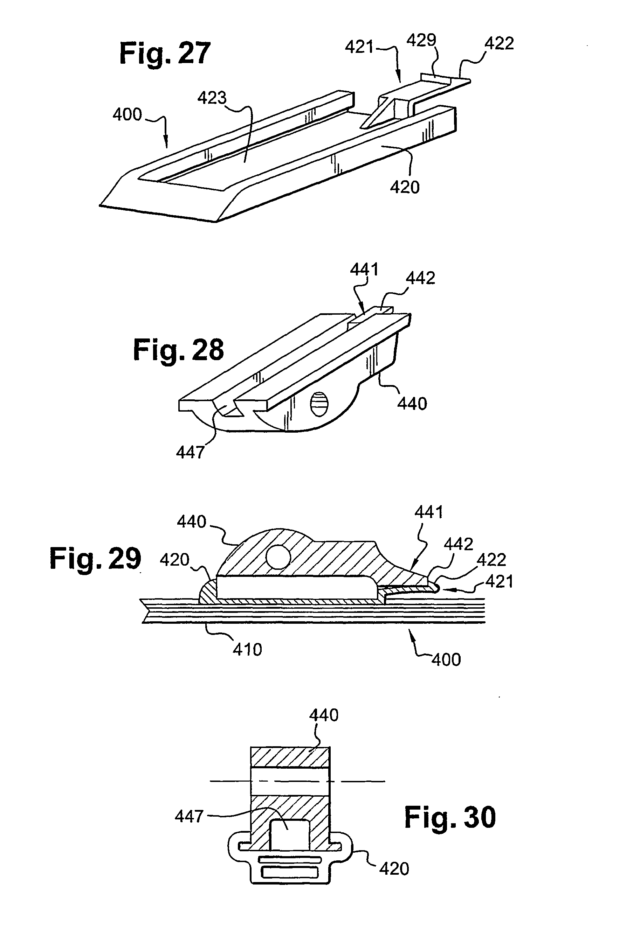

La figure 27 illustre un support de liaison 420 d'un balai d'essuie-glace plat 400 qui est conforme à un quatrième mode de réalisation de l'invention et qui est compatible avec tout type de connecteur amovible 440 conforme à l'invention.

Ce quatrième mode de réalisation diffère du troisième précédemment décrit, essentiellement par le fait que les moyens de verrouillage 421 sont dotés cette fois d'un élément de blocage 422 qui est solidaire du support de liaison 420, et que les moyens de fixation 441 sont quant à eux pourvus d'un élément d'ancrage 442 ménagé sur le connecteur 440.

Cette configuration s'avère plus intéressante en terme de fiabilité que la précédente puisque le moyen d'assemblage à priori le plus fragile, à savoir l'élément de blocage 422 élastiquement déformable, est ici solidaire du balai d'essuie-glace plat 400, c'est-à-dire du composant qui va être amené à être changé le plus souvent. Le connecteur amovible 440, qui supporte l'élément d'ancrage 442, bénéficie en effet intrinsèquement d'une durée de vie considérablement plus importante.

Ainsi qu'on peut voir sur la figure 27, le support de liaison 420 est sensiblement le même que celui du troisième mode de réalisation, à la différence près qu'il comporte un élément de blocage 422 qui est ménagé au niveau de la partie arrière ouverte du réceptacle 423. Il s'agit là encore d'une languette élastiquement déformable qui s'étend longitudinalement vers l'extérieur, dans le plan sagittal du support de liaison 420.

Conformément à la figure 28, la spécificité structurelle du connecteur 440 selon le quatrième mode de réalisation, réside essentiellement dans le fait qu'il comporte un élément d'ancrage 442 formant butée. Il s'agit ici d'une patte rigide est ménagé au niveau de la partie arrière du connecteur 440 et qui s'étend longitudinalement vers l'extérieur dans le plan sagittal dudit connecteur 440. On observe par ailleurs qu'une profonde rainure longitudinale 447 est ménagée dans le plan sagittal du connecteur 440. Elle est dimensionnée de manière à pouvoir laisser passer l'élément de blocage 422 lors du coulissement du connecteur 440 dans le support de liaison 420.

Les figures 29 et 30 permettent de visualiser l'assemblage entre le connecteur 440 et le support de liaison 420, ainsi que le verrouillage entre l'élément de blocage 422 et l'élément d'ancrage 442. Les principes de montage étant similaires à ceux du troisième mode de réalisation, ils ne seront pas développés à nouveau ici. On note simplement la présence d'un cran de verrouillage 429 à l'extrémité libre de l'élément de blocage 422 (figure 27).

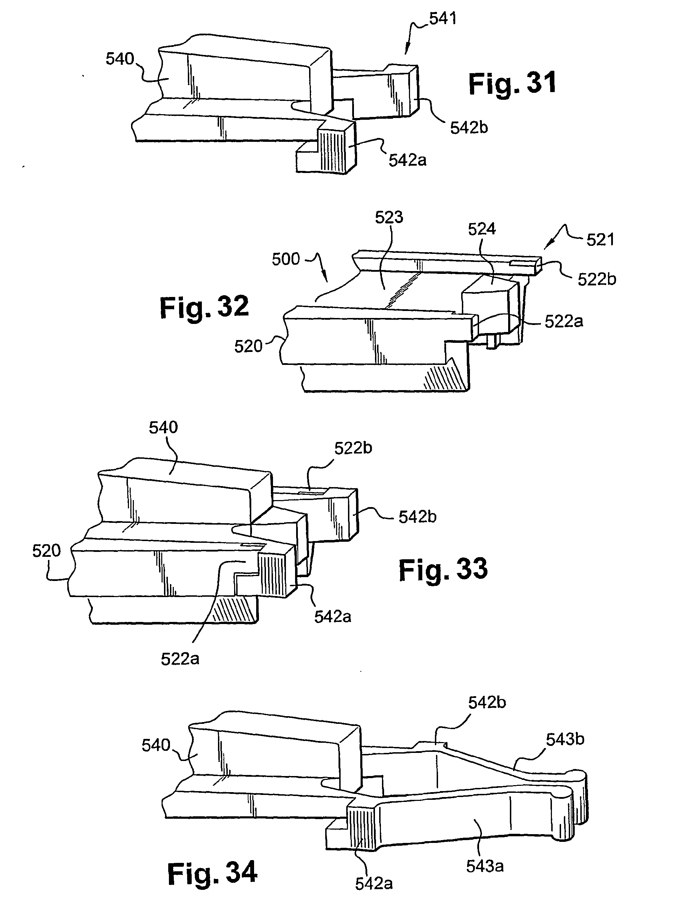

Le cinquième mode de réalisation représenté aux figures 31 à 33 se rapproche dans l'esprit du second mode de réalisation des figures 16 à 23, à la différence près que c'est ici le connecteur amovible 540 qui est doté des deux éléments de blocage 542a, 542b, tandis que c'est conséquemment le support de liaison 520 qui dispose de deux éléments d'ancrage 522a, 522b.

Ainsi qu'on peut le voir à la figure 31, les éléments de blocage 542a, 542b du connecteur 540 sont constitués par deux pattes élastiquement déformables dans un plan perpendiculaire au plan sagittal. Ces deux pattes flexibles 542a, 542b sont ménagées de manière totalement symétrique à l'arrière du connecteur 540, et elles s'étendent vers l'extérieur.

Le support de liaison 520 associé est visible à la figure 32. Il se caractérise tout d'abord par le fait que le rebord arrière délimitant le réceptacle 523 est ouvert en deux endroits de part et d'autre d'une portion centrale formant butée 524, afin de laisser passer les éléments de blocage 542a, 542b lorsque le connecteur 540 est emboîté dans le réceptacle 523. Le support de liaison 520 se distingue ensuite par la présence des deux éléments d'ancrage 522a, 522b qui sont ménagés à la partie arrière dudit support de liaison 520, et qui s'étendent longitudinalement vers l'extérieur dans le prolongement des rebords latéraux qui délimitent transversalement le réceptacle 523.

Conformément à la figure 33, l'ensemble est agencé de manière à ce que les élément de blocage 542a, 542b puissent coopérer par emboîtement bloquant avec les éléments d'ancrage 522a, 522b dès lors que le connecteur 540 est imbriqué dans le support de liaison 520 intégré au balai d'essuie-glace plat 500.

La faiblesse de ce cinquième mode de réalisation par rapport au second, réside dans le fait que les moyens d'assemblage 542a, 542b les plus fragiles sont ici solidaires du composant 540 le plus résistant du balai d'essuie-glace plat ; les moyens d'assemblage 522a, 522b les plus résistants étant à contrario logiquement assujettis au composant 520 le moins endurant.

La figure 34 fait apparaître une variante de ce cinquième mode de réalisation de l'invention. Cette alternative se singularise par le fait que les pattes élastiquement déformables 542a, 542b, formant éléments de blocage, sont prolongées par des languettes 543a, 543b tout aussi flexibles dont les extrémités libres respectives sont presque jointives. Un tel agencement permet de générer un effet de rappel élastique dès lors que les pattes sont sollicitées en rapprochement, ce qui va avoir pour conséquence de garantir l'emboîtement bloquant entre les éléments de blocage 542a, 542b et les éléments d'ancrage 522a, 522b, et donc le verrouillage de l'assemblage entre le connecteur 540 et le support de liaison 520.

L'invention concerne par ailleurs tout dispositif d'essuyage doté d'un quelconque balai d'essuie-glace plat 100, 200, 300, 400, 500 tel que précédemment décrit, ainsi que d'un quelconque connecteur amovible également tel que précédemment décrit.

Bien entendu, l'invention est en outre relative à tout véhicule automobile pourvu d'au moins un tel dispositif d'essuyage.

## Revendications

1. Balai d'essuie-glace plat (100, 200, 300, 400, 500) notamment pour un système d'essuie-glace de véhicule automobile, comportant une lame d'essuyage (110, 210, 410) sur laquelle est monté un support de liaison (120, 220, 320, 420, 520) destiné au raccordement dudit balai d'essuie-glace plat (100, 200, 300, 400, 500), **caractérisé en ce que** le support de liaison (120, 220, 320, 420, 520) est apte à être solidarisé rigidement et de manière amovible à un connecteur (130, 140, 150, 230, 240, 250, 340, 440, 540) qui est lui-même en mesure d'être couplé de manière amovible à un bras d'actionnement (160, 170, 180, 260, 270, 280), et **en ce que** le support de liaison (120, 220, 320, 420, 520) est apte à s'emboîter au moins partiellement avec le connecteur (130, 140, 150, 230, 240, 250, 340, 440, 540), et comporte des moyens de verrouillage (121, 221, 321, 421, 521) à même de maintenir ledit support de liaison (120, 220, 320, 420, 520) et ledit connecteur (130, 140, 150, 230, 240, 250, 340, 440, 540) en position complètement emboîtée.

2. Balai d'essuie-glace plat (100, 200, 300, 400, 500) selon la revendication 1, **caractérisé en ce que** le support de liaison (120, 220, 320, 420, 520) est apte à être solidarisé au connecteur amovible (130, 140, 150, 230, 240, 250, 340, 440, 540) par clipsage.

3. Balai d'essuie-glace plat (100, 200, 300, 400, 500) selon la revendication 1 ou 2, **caractérisé en ce que** l'emboîtement entre le support de liaison (120, 220, 320, 420, 520) et le connecteur (130, 140, 150, 230, 240, 250, 340, 440, 540) est réalisé suivant une direction déterminée, et **en ce que** les moyens de verrouillage (121, 221, 321, 421, 521) sont aptes à bloquer la mobilité relative entre ledit élément de liaison (120, 220, 320, 420, 520) et ledit connecteur (130, 140, 150, 230, 240, 250, 340, 440, 540), suivant la direction d'emboîtement.

4. Balai d'essuie-glace plat (100, 200, 500) selon l'une quelconque des revendications 1 à 3, **caractérisé en ce que** le support de liaison (120, 220, 520) est apte à s'emboîter ponctuellement avec une première partie du connecteur (130, 140, 150, 230, 240, 250, 540), et **en ce que** les moyens de verrouillage (121, 221, 521) sont aptes à maintenir localement une seconde partie dudit connecteur (130, 140, 150, 230, 240, 250, 540), ladite seconde partie étant positionnée sensiblement en opposition par rapport à la première.

5. Balai d'essuie-glace plat (300, 400) selon l'une quelconque des revendications 1 à 3, **caractérisé en ce que** le support de liaison (320, 420) est apte à s'emboîter sur sensiblement toute la longueur du connecteur (340, 440), suivant une direction comprise dans un plan sensiblement perpendiculaire au plan sagittal du balai d'essuie-glace plat (300, 400), et **en ce que** les moyens de verrouillage (321, 421) sont aptes à bloquer la mobilité relative entre ledit support de liaison (320, 420) et ledit connecteur (340, 440), suivant leur direction d'emboîtement.

6. Balai d'essuie-glace plat (100, 200, 400) selon l'une quelconque des revendications 1 à 5, **caractérisé en ce que** les moyens de verrouillage (121, 221, 421) comportent au moins un élément de blocage (122, 222a, 222b, 422) qui est apte, d'une part, à se déformer élastiquement pour permettre l'emboîtement dit principal entre le support de liaison (120, 220, 420) et le connecteur (130, 140, 150, 230, 240, 250, 440), et d'autre part, à coopérer par emboîtement bloquant avec le connecteur (130, 140, 150, 230, 240, 250, 440) une fois l'emboîtement principal complètement réalisé, ledit emboîtement bloquant s'effectuant suivant une direction sensiblement perpendiculaire à celle dudit emboîtement principal.

7. Balai d'essuie-glace plat (300, 500) selon l'une quelconque des revendications 1, à 4, **caractérisé en ce que** les moyens de verrouillage (321, 521) comportent au moins un élément d'ancrage (322, 522a, 522b) qui est apte à coopérer par emboîtement bloquant avec un élément élastiquement déformable (342, 542a, 542b) solidaire du connecteur (340, 540), ledit emboîtement bloquant s'effectuant une fois l'emboîtement dit principal entre le connecteur (340, 540) et le support de liaison (320, 520) complètement réalisé, et suivant une direction sensiblement perpendiculaire à celle dudit emboîtement principal.

8. Balai d'essuie-glace plat (200) selon l'une quelconque des revendications 1 à 7, **caractérisé en ce que** le support de liaison (220) comporte en outre des moyens de centrage (215) aptes à positionner et à bloquer transversalement le connecteur (230, 240, 250), une fois l'emboîtement principal entre ledit support de liaison (220) et ledit connecteur (230, 240, 250) complètement réalisé.

9. Balai d'essuie-glace plat (200) selon la revendication 8, **caractérisé en ce que** les moyens de centrage (215) comportent au moins un élément (216) apte à s'emboîter avec une partie (232) de forme sensiblement complémentaire ménagée sur le connecteur (230, 240, 250), suivant une direction sensiblement colinéaire à celle de l'emboîtement principal entre ledit connecteur (230, 240, 250) et le support de liaison (220).

10. Connecteur (130, 140, 150, 230, 240, 250, 340, 440, 540) destiné à coupler un balai d'essuie-glace plat (100, 200, 300, 400, 500) selon l'une quelque des revendications précédentes, avec un bras d'actionnement (160, 170, 180, 260, 270, 280) notamment d'un système d'essuie-glace de véhicule automobile, **caractérisé en ce que** le connecteur (130, 140, 150, 230, 240, 250, 340, 440, 540) est apte, d'une part, à être solidarisé rigidement et de manière amovible au support de liaison (120, 220, 320, 420, 520) du balai d'essuie-glace plat (100, 200, 300, 400, 500), et d'autre part, à être couplé de manière amovible au bras d'actionnement (160, 170, 180, 260, 270, 280), et **en ce qu'**il est apte à s'emboîter au moins partiellement avec le support de liaison (120, 220, 320, 420, 520), et comporte des moyens de fixation (141, 241, 341, 441, 541) à même de le maintenir avec ledit support de liaison (120, 220, 320, 420, 520) en position complètement emboîtée.

11. Connecteur (130, 140, 150, 230, 240, 250, 340, 440, 540) selon la revendication 10, **caractérisé en ce qu'**il est apte à être couplé alternativement à au moins deux types différents de bras d'actionnement (160, 170, 180, 260, 270, 280).

12. Connecteur (130, 140, 150, 230, 240, 250, 340, 440, 540) selon l'une des revendications 10 ou 11, **caractérisé en ce qu'**il est apte à être solidarisé au support de liaison (120, 220, 320, 420, 520) par clipsage.

13. Connecteur (130, 140, 150, 230, 240, 250, 340, 440, 540) selon la revendication 10, 11 ou 12, **caractérisé en ce que** l'emboîtement entre le connecteur (130, 140, 150, 230, 240, 250, 340, 440, 540) et le support de liaison (120, 220, 320, 420, 520) est réalisé suivant une direction déterminée, et **en ce que** les moyens de fixation (141, 241, 341, 441, 541) sont aptes à bloquer la mobilité relative entre ledit connecteur (130, 140, 150, 230, 240, 250, 340, 440, 540) et ledit élément de liaison (120, 220, 320, 420, 520), suivant la direction d'emboîtement.

14. Connecteur (130, 140, 150, 230, 240, 250, 540) selon l'une quelconque des revendications 10 à 13, **caractérisé en ce qu'**il est apte à s'emboîter ponctuellement avec une première partie du support de liaison (120, 220, 520), et **en ce que** les moyens de fixation (141, 241, 541) sont aptes à maintenir localement une seconde partie du support de liaison (120, 220, 520), ladite seconde partie étant positionnée sensiblement en opposition par rapport à la première.

15. Connecteur (340, 440) selon l'une quelconque des revendications 10 à 13, **caractérisé en ce qu'**il est apte à s'emboîter sur sensiblement toute la longueur du support de liaison (320, 420), suivant une direction comprise dans un plan sensiblement perpendiculaire au plan sagittal du balai d'essuie-glace plat (300, 400), et **en ce que** les moyens de fixation (341, 441) sont aptes à bloquer la mobilité relative entre ledit connecteur (340, 440) et ledit support de liaison (320, 420), suivant leur direction d'emboîtement.

16. Connecteur (340, 540) selon l'une quelconque des revendications 10 à 15, **caractérisé en ce que** les moyens de fixation (341, 541) comportent au moins un élément de blocage (342, 542a, 542b) qui est apte, d'une part, à se déformer élastiquement pour permettre l'emboîtement dit principal entre le connecteur (340, 540) et le support de liaison (320, 520), et d'autre part, à coopérer par emboîtement bloquant avec le support de liaison (320, 520) une fois l'emboîtement principal complètement réalisé, ledit emboîtement bloquant s'effectuant suivant une direction sensiblement perpendiculaire à celle dudit emboîtement principal.

17. Connecteur (130, 140, 150, 230, 240, 250, 440) selon l'une quelconque des revendications 10 à 16, **caractérisé en ce que** les moyens de fixation (141, 241, 441) comportent au moins un élément d'ancrage (142, 242, 442) qui est apte à coopérer par emboîtement bloquant avec un élément élastiquement déformable (122, 222a, 222b, 422) solidaire du support de liaison (120, 220, 420), ledit emboîtement bloquant s'effectuant une fois l'emboîtement dit principal entre le connecteur (130, 140, 150, 230, 240, 250, 440) et le support de liaison (120, 220, 420) complètement réalisé, et suivant une direction sensiblement perpendiculaire à celle dudit emboîtement principal.

18. Connecteur (230, 240, 250) selon l'une quelconque des revendication 10 à 17, **caractérisé en ce qu'**il comporte en outre des moyens de guidage (231) aptes à positionner et à bloquer transversalement le support de liaison (200), une fois l'emboîtement principal entre ledit connecteur (230, 240, 250) et ledit support de liaison (200) complètement réalisé.

19. Connecteur (230, 240, 250) selon la revendication 18, **caractérisé en ce que** les moyens de guidage (231) comportent au moins un élément (232) apte à s'emboîter avec une partie (216) de forme sensiblement complémentaire ménagée sur le support de liaison (200), suivant une direction sensiblement colinéaire à celle de l'emboîtement principal entre ledit connecteur (230, 240, 250) et ledit support de liaison (220).

20. Dispositif d'essuyage, **caractérisé en ce qu'**il comporte un balai d'essuie-glace plat (100, 200, 300, 400, 500) selon l'une quelconque des revendications 1 à 9, ainsi qu'un connecteur amovible (130, 140, 150, 230, 240, 250, 340, 440, 540) selon l'une quelconque des revendications 10 à 19.

21. Véhicule automobile, **caractérisé en ce qu'**il comporte au moins un dispositif d'essuyage selon la revendication précédente.

## Claims

1. A flat windscreen wiper blade (100, 200, 300, 400, 500) more particularly for a wiper blade system of a motor vehicle, including a wiping blade (110, 210, 410) whereon a support link (120, 220, 320, 420, 520) is mounted, which is intended for the connection of said flat windscreen wiper blade (100, 200, 300, 400, 500) **characterized in that** the support link (120, 220, 320, 420, 520) is able to be made rigidly and removeably integral with a connector (130, 140, 150, 230, 240, 250, 340, 440, 540), which is also able to be removeably coupled with an actuation arm, (160, 170, 180, 260, 270, 280) and **in that** the support link (120, 220, 320, 420, 520) is able to be fitted at least partially with the connector (130, 140, 150, 230, 240, 250, 340, 440, 540), and includes locking means (121, 221, 321, 421, 521) able to hold said support link (120, 220, 320, 420, 520) and said connector (130, 140, 150, 230, 240, 250, 340, 440, 540) in a totally fitted position.

2. A flat windscreen wiper blade (100, 200, 300, 400, 500) according to claim 1, **characterized in** the support link (120, 220, 320, 420, 520) is able to be made integral with the removable connector (130, 140, 150, 230, 240, 250, 340, 440, 540) by clipping,

3. A flat windscreen wiper blade (100, 200, 300, 400, 500) according to claim 1 or 2, **characterized in that** the fitting between the support link (120, 220, 320, 420, 520) and the connector (130, 140, 150, 230, 240, 250, 340, 440, 540) is performed according to a determined direction, and **in that** the locking means (121, 221, 321, 421, 521) are able to lock the relative mobility between said support link (120, 220, 320, 420, 520), and said connector (130, 140, 150, 230, 240, 250, 340, 440, 540), according to the fitting direction thereof.

4. A flat windscreen wiper blade (100, 200, 500) according to any one of claims 1 to 3, **characterized in that** the support link (120, 220, 520), is able to be punctually fitted with a first part of the connector (130, 140, 150, 230, 240, 250, 540), and **in that** the Locking means (121, 221, 521) are able to locally hold a second part of said connector (130, 140, 150 230, 240, 250, 540), with said second part being positioned substantially opposite the first one.

5. A flat windscreen wiper blade (30, 400) according to any one of claims 1 to 3, **characterized in that** the support link (320, 420) is able to be fitted on substanially the whole length of the connector (340, 440), according to a direction comprised in a plane substantially perpendicular to the sagittal plane of the flat windscreen wiper blade (300, 400), and **in that** the locking means (321, 421) are able to lock the relative nobility between said support link (320, 420) and said connector (340, 440), according to the fitting direction thereof.

6. A flat windscreen wiper blade (100, 200, 400) according to any one of claims 1 to 5, **characterized in that** the locking means (141, 221, 421) include at least one locking element (122, 222a 222b, 422) which is able, on the one hand to elastically deform to enable the so-called main fitting between the support link (120, 220, 420) and the connector (130, 140, 150, 230, 240, 250, 440) and, on the other hand, to cooperate, trough a locking fitting, with the connector (130, 140, 150, 230, 240, 250, 440), when the main fitting is completed, with said locking fitting being performed according to a direction substantially perpendicular to that of said main fitting.

7. A flat windscreen wiper blade (300, 500) according to one or claims 1 to 4, **characterized in that** the locking means (321, 521) include at least one anchoring element (322, 522a, 522b) which is able to cooperate, through a locking fitting, with an elastically deformable element (342, 542a, 542b) integral with a connector (340, 540), with said locking fining being performed when the so-called main fitting between the connector (340, 540) and the support link (320, 520) is completed, and according to a direction substantially perpendicular to that of said main fitting.

8. A flat windscreen wiper blade (200) according to any one of claims 1 to 7, **characterized in that** the support link (220) further includes centring means (215) able to position and transversally lock the connector (230, 240, 250), when the main fitting between said support link (220) and said connector (230, 240, 250) is completed.

9. A flat windscreen wiper blade (200) according to claim 8, **characterised in that** the centring means (215) -include at least one element (216) able to fit with a part (232) having a substantially matching shape and arranged on the connector (230, 240, 250), according to a direction substantially collinear with that of the main fitting between said connector (230, 240, 250) and said support link (220).

10. A connector (130, 140, 150, 230, 240, 250, 540, 440, 540) intended to couple a flat windscreen wiper blade (100, 200, 300, 400, 500) according to any one of the preceding claims, with an actuation arm (160, 172, 180, 260, 270, 280) more particularly of a wiper blade system of a monitor vehicle, **characterized in that** the connector (130, 140, 501, 311, 24C, 250, 340, 440, 1, 40) is able, on the one hand, to be made rigidly and removeably integral with the support link (120, 220, 320, 421, 520) of the flat windscrcen wiper blade (100, 200, 300O, 400, 500), and on the other hand, to be removeably coupled with the actuation arm (160, 170, 180, 260, 270, 230), and **in that** it is able to fit at least partially with the support link (120, 220, 320, 420, 520) and includes fixing means (141, 241, 341, 441, 541) able to hold it with said support link (120, 220, 320, 420 520) in a totally fitted position.

11. A connector (130, 140, 1.32, 230, 240, 250, 340, 440, 540) according to claim 10, **characterized in that** it is able to be alternately coupled with at least two different types of actuation arms (160, 170, 180, 260, 270, 280).

12. A connector (130, 140, 150, 230, 240, 250, 340, 440, 550) according to one of claims 10 or 11, **characterized in that** it is able to be made integral with the support link (120, 220, 320, 420, 520) by clipping.

13. A connector (130, 140, 150, 230, 240, 250, 340, 440, 540) according to claim 10, 11 or 12, **characterized in that** the fitting between the connector (130, 140, 150, 230, 240, 250, 340, 440, 540) and the support link (120, 220, 320, 420, 520) is performed according to a determined direction, and **in that** the fixing means (141, 241, 341, 441, 541) are able to lock the relative mobility between said connector (130, 140, 150, 230, 210, 250, 340, 440, 540) and said support link (120, 220, 320, 420, 520), according to the fluting direction thereof.

14. A connector (130, 140, 150, 230, 240, 250, 540) according to any one of claims 10 to 13, **characterized in that** it is able to be punctually fitted with a first part of the support link (120, 220, 520), and **in that** the fixing means (141, 241, 541) are able to locally hold a second part of the support link (120, 220, 520), with said second part being positioned substantially opposite the first one.

15. A connector (340, 440) according to any one of claims 10 to 13, **characterized in that** it is able to be fitted on substantially the whole length of the support link 1320, 420), according to a direction included in a plane substantially perpendicular to the sagittal plane of the flat windscreen wiper blade (300, 400), and **in that** the fixing means (341, 441) are able to lock the relative mobility between said connector (340, 440) and said support link (320, 420), according to the fitting direction thereof.

16. A connector (340, 540) according to any one of claims 10 to 15, **characterized in that** the fixing means (341, 541) include at least one locking element (342, 542a, 542b) which is able, on the one hand, to elastically deform to enable the so-called main fitting between the connector (340, 540) and the support link (320, 520) and, on the other hand, to cooperate, through a locking fitting, with the support link (320, 520), when the main fitting is completed, with said locking fitting being performed according to a direction substantially perpendicular to that of said main fitting.

17. A connector (130, 140, 150, 230, 240, 250, 440) according to any one of claims 10 to 16, **characterised in that** the fixing means (141, 241, 441) include at least one anchoring element (142, 242, 442) which is able to cooperate, through a locking fitting, with an elastically deformable element (122, 222a, 222b, 422) integral with the support link (120, 220, 420), with said locking fitting being performed when the so-called main fitting between the connector (130, 140, 150, 230, 240, 250, 440) and the support link (120, 220, 420) is completed, and according to a direction substantially perpendicular to that of said main fitting.

18. A connector (230, 240, 250) according two any one of claims 10 to 17, **characterized in that** it further includes guiding means (231) able to be positioned and to transversally lock the support link (200), when the main fitting between said connector (230, 240, 250) and said support link (200) is completed.

19. A connector (230, 240, 250) according to claim 18, **characterized in that** the guiding means (231) include at least one element (232) able to be fitted on to a part (216) having a substantially matching shape and arranged on the support link (200), according to a direction substantially collinear with that of the main fitting between said connector (230, 240, 250) and said support link (200).

20. A wiping device, **characterized in that** it includes a flat windscreen wiper blade (100, 200, 300, 400, 500) according to any one of claims 1 to 9, and a removable connector (130, 140, 150, 230, 240, 250, 340, 440, S40), according to any one of claims 10 to 19.

21. A motor vehicle, **characterized in that** it includes at least one wiping device according to the preceding claim.

## Patentansprüche

1. Flacher Scheibenwischerarm (100, 200, 300, 400, 500) insbesondere für ein scheibenwischersystem eines Automobils, mit einem Wischerblatt (110, 210, 410), auf dem ein Verbindungsträger (120, 220, 320, 420, 520) angebracht ist, der zum Anschluss an den genannten flachen Scheibenwischer (100, 200, 300, 400, 500) bestimmt ist, **dadurch gekennzeichnet, dass** der Verbindungsträger (120, 220, 320, 420, 520) geeignet ist, steif und abnehmbar mit einem Anschlssglied (130, 140, 150, 230, 240, 250, 340, 440, 540) fest verbunden zu werden, das seinerseits in der Lage ist, abnehmbar an einem Betätigungsarm (160, 170, 180, 260, 270, 280) gekoppelt zu werden, und dass der Verbindungsträger (120, 220, 320, 420, 520) geeignet, ist, wenigstens teilweise mit dem Anschlussglied (130, 140, 150, 230, 240, 250, 340, 440, 540) zu verrasten und Verriegelungsmittel (121, 221, 321, 421, 521) umfasst, die in der Lage sind, den genannten Verbindungsträger (120, 220, 320, 420, 520) und das genannte Anschlussglied (130, 140, 150, 230, 240, 250, 340, 440, 540) in komplett verrasteter Position zu halten.

2. flacher Scheibenwischerarm (100, 200, 300, 400, 500) gemäß Anspruch 1, **dadurch gekennzeichnet, dass** der Verbindungsträger (120, 220, 320, 420, 520) geeignet ist, mit dem abnehmbaren Anschlussglied (130, 140, 150, 230, 240, 250, 340, 440, 540) per verkippen fest befestigt zu werden.

3. Flacher Scheibenwischerarm (100, 200, 300, 400, 500) gemäß Anspruch 1 oder 2, **dadurch gekennzeichnet, dass** das Einrasten zwischen dem Vorbindungsträger (120, 220, 320, 420, 520) und dem Anschlussglied (130, 140, 150, 230, 240, 250, 340, 440, 540) gemäß einer bestimmten Richtung realisiert wird und dass die Verriegelungsmittel (121, 221, 321, 421, 521) geeignet sind, die relative Mobilität zwischen dem genannten Verbindungselement (120, 220, 320, 420, 520) und dem genannten Anschlussglied (130, 140, 150, 230, 240, 250, 340, 440, 540) gemäß der Verrast-Richtung zu blockieren.

4. Flacher Scheibenwischerarm (100, 200, 500) gemäß Anspruch 1 bis 3, **dadurch gekennzeichnet, dass** der Verbindungsträger (120, 220, 520) geeignet ist, punktuell mit einem ersten Teil des Anschlussgliedes (130, 140, 150, 230, 240, 250, 540) zu verrasten, dass die Veriegelungsmittel (121, 221, 521) geeignet sind, lokal einen zweiten Teil des genannten Anschlussgliedes (130, 140, 150, 230, 240, 250, 540) zu halten, wobei der genannte zweite Teil deutlich abgewandt im Verhältnis zum ersten positioniert ist.

5. Flacher Schelbenwischerarm (300, 400) gemäß Anspruch 1 bis 3, **dadurch gekennzeichnet, dass** der Verbindungsträger (320, 420) geeignet ist, über deutlich die gesamte Länge des Anschlussgliedes (340, 440) gemäß einer Richtung zu verrasten, die in einer deutlich lotrechten Ebene zur sagittalen Ebene des flachen Scheibenwischerarms (300, 400) inbegriffen ist und dass die Verriegelungsmittel (321, 421) geeignet sind, die relative Mobilität zwischen dem genannten Verbindungsträger (320, 420) und dem genannten Anschlussglied (340, 440) gemäß ihrer Verrast-Richtung zu blockieren.

6. Flacher Scheibenwischerarm (100, 200, 400) gemäß Anspruch 1 bis 5, **dadurch gekennzeichnet, dass** die Verriegelungsmittel (123, 221, 421) wenigstens ein Feststellelement (122, 222a, 222d, 422) umfassen, das geeignet ist, sich einerseits elastisch zu verformen, um das so genannte Haupt-Verrasten zwischen dem Verbindungsträger (120, 220, 420) und dem Anschlussglied (130, 140, 150, 230, 240, 250, 440) zu erlauben und andererseits per blockierendem Verrasten, mit dem Anschlussglied (130, 140, 150, 230, 240, 250, 440) zusammenzuwirken, sobald das Haupt-Verrasten komplett realisiert ist, wobei das genannte blockierende Verrasten gemäß einer deutlich lotrechten Richtung zu der des genannten Haupt-Verrastens erfolgt.

7. Flacher Scheibenwischerarm (300, 500) gemäß Anspruch 1 bis 4, **dadurch gekennzeichnet, dass** die Verriegelungsmittel (321, 521) wenigstens ein Vorankerungselement (322, 522a, 522b) umfassen, das geeignet ist, per blockierendem Verrasten mit einem elastisch verformbaren Element (342, 542a, 542b) zusammenzuwirken, das fest mit dem Anschlussglied (340, 540) befestigt ist, wobei das genannte blockierende Verrasten erfolgt, nachdem das so genannte Haupt-Verrasten zwischen dem Anschlussglied (340, 540) und dem Verbindungsträger (320, 520) komplett realisiert ist, und gemäß einer deutlich Lotrechten Richtung zu der des genannten Haupt-Verrastens.

8. Flacher Scheibenwischerarm (200) gemäß Anspruch 1 bis 7, **dadurch gekennzeichnet, dass** der Verbindungstrager (220) darüber hinaus Zentrierungsmittel (215) umfasst, die geeignet sind, das Anschlussglied (230, 240, 250) transversal zu positionieren und zu blockieren, nachdem das Haupt-Verrasten zwischen dem Verbindungsträger (220) und dem genannten Anschlussglied (230, 240, 250) komplett realisiert ist.

9. Flacher Scheibenwischerarm (200) gemäß Anspruch 8, **dadurch gekennzeichnet, dass** die Zentrierungsmitel (215) wenigstens ein Element (216) umfassen, das geeignet ist, mit einem auf dem Anschlussglied (230, 240, 250) ausgesparten Teil (232) in deutlich komplementärer Form gemäß einer deutlich kollinearen Richtung zu der des Haupt-Verrastens zwischen dem genannten Anschlussglied (230, 240, 250) und dem Verbindungsträger (220) zu verrasten.

10. Anschlussglied (130, 140, 150, 230, 240, 250, 340, 440, 540), das dazu bestimmt ist, einen flachen Scheibenwischerarm (100, 200, 300, 400, 500) gemäß einem der vorherigen Ansprüche mit einem Betätigungsarm (160, 170, 180, 260, 270, 280) insbesondere eines Scheibenwischersystems eines Automobils zu koppeln, **dadurch gekennzeichnet, dass** das Anschlussglied (130, 140, 150, 230, 240, 250, 340, 440, 540) geeignet ist, einerseits steif und abnehmbar fest am Verbindungsträger (120, 220, 320, 420, 520) des flachen Scheibenwischerarms (100, 200, 300, 400, 500) befestigt zu werden und andererseits abnehmbar am Betätigungsarm (160, 170, 180, 260, 270, 280) gekoppelt zu werden, und dass es geeignet ist, wenigstens teilweise mit dem Verbindungsträger (120, 220, 320, 420, 520) zu verrasten und Befestigungsmittel (141, 241, 341, 441, 541) umfasst, die in der Lage sind, ihn mit dem genannten Verbindungsträger (120, 220, 320, 420, 520) in komplett verrasteter Position zu halten.

11. Anschlussglied (130, 140, 150, 230, 240, 250, 340, 440, 540) gemäß Anspruch 10, **dadurch gekennzeichnet, dass** es geeignet ist, alternativ an wenigstens zwei unterschiedliche Typen von Betätigungsarmen (160, 170, 180, 260, 270, 280) gekoppelt zu werden.

12. Anschlussglied (130, 140, 150, 230, 240, 250, 341, 440, 541) gemäß Anspruch 10 oder 11, **dadurch gekennzeichnet, dass** es geeignet ist, per Verklippen an dem Verbindungsträger (120, 220, 320, 420, 520) fest befestigt zu werden.

13. Anschlussglied (130, 140, 150, 230, 240, 250, 340, 440, 540) gemäß Anspruch 10, 11, oder 12, **dadurch gekennzeichnet, dass** das Verrasten zwischen dem Anschlussglied (130, 140, 150, 230, 240, 250, 340, 440, 540) und dem Verbindungsträger (120, 220, 320, 420, 520) gemäß einer bestimmten Richtung realisiert wird und dass die Befestigungsmittel (141, 241, 341, 441, 541) geeignet sind, die relative Mobilität zwischen dem genannten Anschlussglied (130, 140, 150, 230, 240, 250, 340, 440, 540) und dem genannten Verbindungselement (120, 220, 320, 420, 520) gemäß der Verrasst-Richtung zu blockieren,

14. Anschlussglied (130, 140, 150, 230, 240, 250, 540) geemäß Anspruch 10 bis 13, **dadurch gekennzeichnet, dass** es geeignet ist, punktuell mit einem ersten Teil des Verbindungsträgers (120, 220, 520) zu verrasten und dass die Befestigungsmittel (141, 241, 541) geeignet sind, einen zweiten Teil des Verbindungsträgers (120, 220, 520) lokal zu halten, wobei der genannte zweite Teil deutlich abgewandt im Verhältnis zum ersten positioniert ist.

15. Anschlussglied (340, 440) gemäß Anspruch 10 bis 13, **dadurch gekennzeichnet, dass** es geeignet ist, über deutlich der gesamten Länge des Verbindungsträgers (320, 420) gemäß einer Richtung einzurasten, die in einer deutlich lotrechen Ebene zur sagittalen Ebene des flachen Scheibenwischerarms (300, 430) inbergriffen ist und dass die Befestigungsmittel (341, 441) geeignet sind, die relative Mobilität zwischen dem genannten Anschlussglied (340, 440) und dem genannten Verbindungsträger (320, 420) gemäß ihrer Rast-Richtung zu blockieren.

16. Anschlussglied (340, 540) gemäß Anspruch 10 bis 15, **dadurch gekennzeichnet, dass** die Befestigungsmittel (341, 541) wenigstens ein Feststellelement (342, 542a, 542b) umfassen, das einerseits geeignet ist, sich elastisch zu verformen, um das so genannte Haupt-Verrasten zwischen dem Anschlussglied (340, 540) und dem Verbindungsträger (320, 520) zu erlauben und andererseits, um per blockierendem Verrasten mit dem Verbindungsträger (320, 520) zusammenzuwirken, nachdem das Haupt-Verrasten komplett realisiert ist, wobei das blockierende verasten gemäß einer deutlich lotrechen Richtung zu der des genannten Haupt-Verrastens erfolgt.

17. Anschlussglied (130, 140, 150, 230, 240, 250, 440) gemäß Anspruch 1 bis 16, **dadurch gekennzeichnet, dass** die Befestigungsmittel (141, 241, 441) wenigstens ein Verankerungselement (142, 242, 442) umfassen, das geeignet ist, per blockierendem Verrasten mit einem elastisch verformbaren Element (122, 222a, 222b, 422), das fest am Verbindungsträger (120, 220, 420) befestigt ist, zusammenzuwirken, wobei das genannte blockierende Verrasten erfolgt, nachdem das so genannte Haupt-Verrasten zwischen dem Anschlussglied (130, 140, 150, 230, 240, 250, 440) und dem verbindungsträger (120, 220, 420) komplett realisiert ist, und gemäß einer deutlich lotrechten Richtung zu der des genannten Haupt-Verrastens.

18. Anschlussglied (230, 240, 250) gemäß Anspruch 10 bis 17, **dadurch gekennzeichnet, dass** es darüber hinaus Führungsmittel (231) umfasst, die geeignet sind, den Verbindungsträger (200) transversal zu positionieren und zu blockieren, nachdem das Haupt-Verrasten zwischen dem genannten Anschlussglied (230, 240, 250) und dem genannten Verbindungsträger (200) komplett realisiert ist.

19. Anschlussglied (230, 240, 250) gemäß Anspruch 18, **dadurch gekennzeichnet, dass** die Führungsmittel (231) wenigstens ein Element (212) umfassen, das geeignet ist, mit einem auf dem Verbindungsträger (200) ausgesparten Teil (216) in deutlich komplementärer Form gemäß einer deutlich kollinearen Richtung zu der des Haupt-Verrastens zwischen dem genannten Anschlussglied (230, 240, 250) und dem genannten Verbindungsträger (220) zu verrasten.

20. Wischvorrichtung, **dadurch gekennzeichnet, dass** sie einen flachen Scheibenwischerarm (100, 200, 300, 400, 500) gemäß Anspruch 1 bis 9 sowie ein abnehmbares Anschlussglied (130, 140, 150, 230, 240, 250, 340, 440, 540) gemäß Anspruch 10 bis 19 umfasst.

21. Automobile, **dadurch gekennzeichnet, dass** es wenigstens eine Wischvorrichtung gemäß dem vorherigen Anspruch umfasst.
